(19) Europäisches Patentamt
European Patent Office
Office européen des brevets

(11) **EP 3 978 226 B1**

(12) **EUROPEAN PATENT SPECIFICATION**

(45) Date of publication and mention
of the grant of the patent:
**14.02.2024 Bulletin 2024/07**

(21) Application number: **21199681.4**

(22) Date of filing: **29.09.2021**

(51) International Patent Classification (IPC):
**B29C 64/118** (2017.01)   **B29C 64/209** (2017.01)
**B29C 64/343** (2017.01)   **B29C 64/393** (2017.01)
**B33Y 30/00** (2015.01)   **B33Y 40/00** (2020.01)
**B33Y 50/02** (2015.01)

(52) Cooperative Patent Classification (CPC):
**B29C 64/118; B29C 64/209; B29C 64/393;
B33Y 30/00; B33Y 40/00; B33Y 50/02**

(54) **THREE-DIMENSIONAL SHAPING APPARATUS**

VORRICHTUNG ZUR DREIDIMENSIONALEN FORMUNG

APPAREIL DE MISE EN FORME TRIDIMENSIONNELLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.09.2020 JP 2020164847**

(43) Date of publication of application:
**06.04.2022 Bulletin 2022/14**

(73) Proprietor: **Seiko Epson Corporation
Tokyo 160-8801 (JP)**

(72) Inventor: **FURUYA, Shusaku
Suwa-shi, 392-8502 (JP)**

(74) Representative: **Lewis Silkin LLP
Arbor
255 Blackfriars Road
London SE1 9AX (GB)**

(56) References cited:
**US-A1- 2014 159 284    US-A1- 2016 144 564
US-A1- 2017 203 507    US-A1- 2017 298 521
US-A1- 2019 118 258    US-A1- 2019 375 148**

**Description**

BACKGROUND

1. Technical Field

The present disclosure relates to a three-dimensional shaping apparatus.

2. Related Art

With respect to a three-dimensional shaping apparatus, for example, JP-A-2006-192710 (Patent Document 1) discloses an apparatus for shaping a three-dimensional shaped article by extruding a molten thermoplastic material on a base stand from a nozzle that performs scanning according to preset shape data, and further stacking the molten material on the material hardened on the base stand.

In the apparatus disclosed in Patent Document 1, heat of a heater for melting the material may be transferred to the three-dimensional shaped article on the base stand to deform the three-dimensional shaped article. In addition, the material may be deposited on a wall face of a nozzle flow channel due to use over time to unexpectedly cause nozzle clogging during shaping of the three-dimensional shaped article.

US 2017/203507 discloses an assembly for use in an additive manufacturing system to print a three-dimensional part that includes an extruder comprising a gear and a motor that turns the gear, wherein rotation of the gear regulates a flow of material out of the extruder. A controller provides a control signal to the motor to control the rate at which the motor turns the at least one gear and incorporates a time-varying signal into the control signal to reduce ripples in the material output by the extruder.

Document US 2019/118258 A1 discloses a fused filament three-dimensional shaping apparatus comprising a control unit is configured to determine a cumulative ejection amount of the material ejected from the nozzle tip.

SUMMARY

According to the invention, a three-dimensional shaping apparatus as defined in claim 1 is provided.

BRIEF DESCRIPTION OF THE DRAWINGS

FIG. 1 is a view showing a schematic configuration of a three-dimensional shaping apparatus according to a first embodiment.
FIG. 2 is a view showing a schematic configuration of a material storage portion and an ejection portion of the first embodiment.
FIG. 3 is a schematic perspective view showing a configuration of a screw at a grooved face side.
FIG. 4 is a top view showing a configuration of a barrel at a screw opposed face side.
FIG. 5 is a view for illustrating the attachment/detachment of a nozzle tip to/from a through hole.
FIG. 6 is a process chart showing a three-dimensional shaping process in the first embodiment.
FIG. 7 is a process chart showing service life expiration determination in the first embodiment.
FIG. 8 is a table showing a service life determination value A.
FIG. 9 is a view showing an example of ejection information displayed on a notification portion.
FIG. 10 is a process chart showing a cumulative ejection amount determination process in the first embodiment.
FIG. 11 is a table showing a service life determination value B and a service life determination value C.
FIG. 12 is a view showing a schematic configuration of a three-dimensional shaping apparatus according to a second embodiment.
FIG. 13 is a process chart showing a service life expiration determination process in a third embodiment.
FIG. 14 is a process chart showing a service life expiration determination process in a fourth embodiment.
FIG. 15 is a process chart showing a service life expiration determination process in a fifth embodiment.
FIG. 16 is a process chart showing a service life expiration determination process in a sixth embodiment.
FIG. 17 is a view showing a schematic configuration of a three-dimensional shaping apparatus according to a seventh embodiment.
FIG. 18 is a view for illustrating a schematic configuration of an ejection portion of the seventh embodiment.
FIG. 19 is a schematic block diagram showing a configuration of a three-dimensional shaping system as an eighth embodiment.

DESCRIPTION OF EXEMPLARY EMBODIMENTS

A. First Embodiment

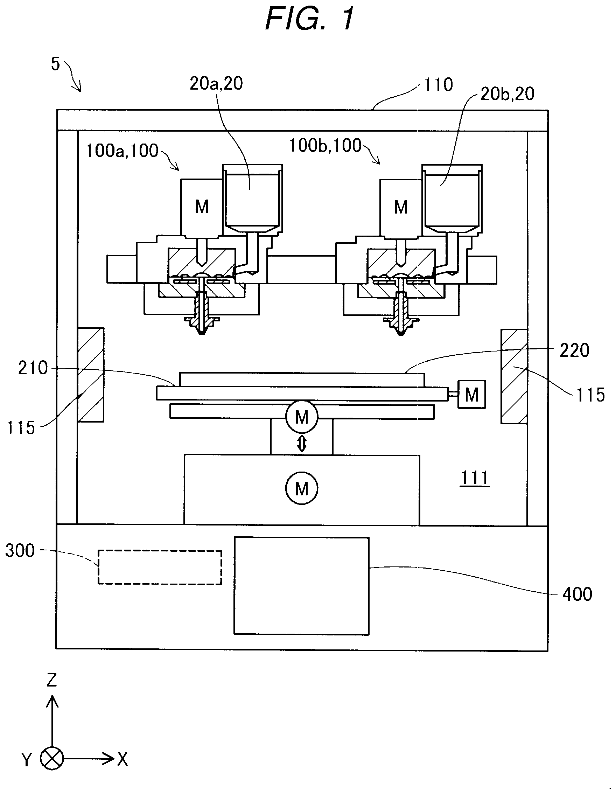

FIG. 1 is a view showing a schematic configuration of a three-dimensional shaping apparatus 5 according to a first embodiment. In FIG. 1, arrows along X, Y, and Z directions orthogonal to one another are illustrated. The X, Y, and Z directions are directions along an X axis, a Y axis, and a Z axis that are three spatial axes orthogonal to one another, and each includes both of one side direction along the X axis, Y axis, or Z axis and a direction opposite thereto. The X axis and Y axis are axes along a horizontal plane, and the Z axis is an axis along a vertical line. In other drawings, arrows along the X, Y, and Z directions are also illustrated as appropriate. The X, Y, and Z directions in FIG. 1 and the X, Y, and Z directions in the other drawings indicate the same directions, respectively.

The three-dimensional shaping apparatus 5 of this embodiment includes a first ejection portion 100a, a second ejection portion 100b, a first material storage portion 20a, a second material storage portion 20b, a chamber 110, a moving mechanism portion 210, a stage 220, a control unit 300, and a notification portion 400. Hereinafter, when the first ejection portion 100a and the second ejection portion 100b are described without particularly making a distinction between them, these portions are sometimes simply referred to as "ejection portion 100". Similarly, when the first material storage portion 20a and the second material storage portion 20b are described without particularly making a distinction between them, these portions are sometimes simply referred to as "material storage portion 20".

The chamber 110 is a housing that has a shaping space 111 inside and stores a part of the three-dimensional shaping apparatus 5. In this embodiment, in the shaping space 111, the material storage portion 20, the ejection portion 100, the moving mechanism portion 210, and the stage 220 are stored. In the chamber 110, for example, an opening portion for allowing the shaping space and the outside to communicate with each other and a door or the like for opening and closing the opening portion may be provided. In this case, a user can take out a shaped article in the chamber 110 through the opening portion by opening the door to bring the opening portion into an open state.

A chamber heating portion 115 is provided in the chamber 110. The chamber heating portion 115 heats the shaping space 111 in the chamber 110. The chamber heating portion 115 may be constituted, for example, by a heater that heats the inside of the chamber 110 or by a circulation device that circulates air inside and outside the chamber 110 while incorporating heated air from the outside of the chamber 110. The chamber heating portion 115 of this embodiment is controlled by the control unit 300. The control unit 300, for example, adjusts the temperature in the chamber 110 by adjusting the output of the chamber heating portion 115 while referring to the temperature acquired by an unillustrated temperature sensor.

The moving mechanism portion 210 changes the relative position of the ejection portion 100 and the stage 220. In this embodiment, the moving mechanism portion 210 moves the stage 220 with respect to the first ejection portion 100a and the second ejection portion 100b. The change of the relative position of the first ejection portion 100a or the second ejection portion 100b with respect to the stage 220 is sometimes simply referred to as movement of the first ejection portion 100a or the second ejection portion 100b. The moving mechanism portion 210 in this embodiment is constituted by a three-axis positioner for moving the stage 220 in three axis directions of the X, Y, and Z directions by the driving forces of three motors. Each motor drives under the control of the control unit 300. In other embodiments, the moving mechanism portion 210 may, for example, be configured to move the ejection portion 100 without moving the stage 220 instead of being configured to move the stage 220. In addition, the moving mechanism portion 210 may be configured to move both the stage 220 and the ejection portion 100.

The control unit 300 is constituted by a computer including one or more processors, a main memory device, and an input/output interface for performing signal input/output to/from the outside. In this embodiment, the control unit 300 exhibits various functions such as a function of executing a three-dimensional shaping process for shaping a three-dimensional shaped article by executing a program or a command read in the main memory device by the processor. The control unit 300 may be constituted by a combination of multiple circuits instead of a computer.

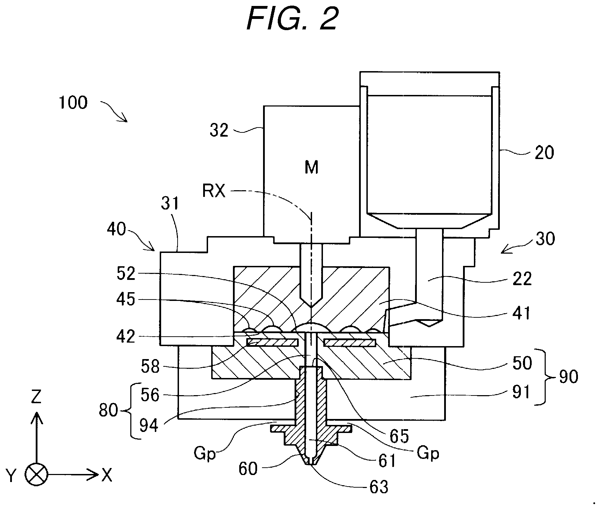

FIG. 2 is a view showing a schematic configuration of the material storage portion 20 and the ejection portion 100 of this embodiment. In FIG. 2, the configurations of the first material storage portion 20a and the first ejection portion 100a are shown. The configurations of the second material storage portion 20b and the second ejection portion 100b are the same as the configurations of the first material storage portion 20a and the first ejection portion 100a, respectively, unless otherwise specified. Hereinafter, when a constituent element related to the first ejection portion 100a and a constituent element related to the second ejection portion 100b are described while making a distinction between them, for the constituent element related to the first ejection portion 100a, "a" is attached to the end of the reference numeral, and for the constituent element related to the second ejection portion 100b, "b" is attached to the end of the reference numeral. When a constituent element of the first ejection portion 100a and a constituent element of the second ejection portion 100b are described without particularly making a distinction between them, the elements are described without attaching "a" or "b" to the end of the reference numeral.

As described above, the ejection portion 100 includes a plasticizing portion 30 and a nozzle tip 60. The plasticizing portion 30 has a material conveying mechanism 40 and a heating block 90. To the ejection portion 100, a material stored in the material storage portion 20 is supplied. More specifically, to the first ejection portion 100a, a first material stored in the first material storage portion 20a is supplied, and to the second ejection portion 100b, a second material stored in the second material storage portion 20b is supplied. The ejection portion 100 plasticizes at least a part of the material supplied from the material storage portion 20 by the plasticizing portion 30 to form a plasticized material, and ejects the formed plasticized material onto the stage 220 from the nozzle tip 60 and stacks the material thereon under the control of the control unit 300. The material stacked on the stage 220 is sometimes referred to as "stacked material". Further, a three-dimensional shaping method for shaping a three-dimensional shaped article by ejecting a material from a nozzle and stacking the ejected material is sometimes referred to as a material extrusion method (ME: Material Extrusion).

The "plasticizing" means melting by applying heat to a material having thermoplasticity. The "melting" not only means transforming a material having thermoplasticity into a liquid by heating the material to a temperature equal to or higher than the melting point, but also means softening a material having thermoplasticity by heating the material to a temperature equal to or higher than the glass transition point so as to exhibit fluidity.

In the material storage portion 20 of this embodiment, a material in a state of a pellet, a powder, or the like is stored. In this embodiment, a material stored in the material storage portion 20 is a resin in a pellet form. The material storage portion 20 of this embodiment is constituted by a hopper. The material stored in the material storage portion 20 is supplied to the material conveying mechanism 40 of the plasticizing portion 30 of the ejection portion 100 through a supply channel 22 provided below the material storage portion 20 so as to couple the material storage portion 20 to the ejection portion 100. In this embodiment, the first material is stored in the first material storage portion 20a, and the first material is supplied to the first material conveying mechanism 40a of the first ejection portion 100a. The second material is stored in the second material storage portion 20b, and the second material is supplied to the second material conveying mechanism 40b of the second ejection portion 100b.

Between the materials, a material to be used for shaping a three-dimensional shaped article having an intended shape is sometimes referred to as "shaping material". Further, between the materials, a material to be used for holding the shape of the shaped article in the middle of shaping by supporting the shaping material in the shaping of the three-dimensional shaped article is sometimes referred to as "support material". A user can obtain the three-dimensional shaped article having an intended shape by removing the support material from the three-dimensional shaped article after completion of the three-dimensional shaped article. The support material is removed by, for example, physically detaching it from a portion shaped by the shaping material of the three-dimensional shaped article. The support material that is soluble in a liquid such as water is sometimes particularly referred to as "soluble support material".

The heating block 90 has a heater 58. Further, the heating block 90 is provided with a through hole 80. The through hole 80 is configured to be able to attach and detach the nozzle tip 60 thereto and therefrom. The material conveying mechanism 40 conveys the material to a nozzle flow channel 61 of the nozzle tip 60 attached to the through hole 80 of the heating block 90. The nozzle tip 60 attached to the heating block 90 is sometimes referred to as "nozzle tip for shaping". Further, a state where the nozzle tip 60 is attached to the heating block 90 is sometimes referred to as "attached state". The plasticizing portion 30 conveys the material supplied to the material conveying mechanism 40 from the material storage portion 20 to the nozzle flow channel 61 of the nozzle tip for shaping by the material conveying mechanism 40, and plasticizes the material through heating by heat of the heating block 90.

The material conveying mechanism 40 of this embodiment includes a screw case 31, a screw 41 stored in the screw case 31, and a driving motor 32 that drives the screw 41. The heating block 90 of this embodiment includes a case portion 91 having an opening portion 94, and a barrel 50 disposed in the case portion 91. The barrel 50 is provided with a communication hole 56. The through hole 80 of this embodiment is formed by allowing the opening portion 94 and the communication hole 56 to communicate with each other. Further, the heater 58 is specifically incorporated in the barrel 50. The screw 41 of this embodiment is a so-called flat screw, and is sometimes referred to as "scroll".

The screw 41 has a substantially columnar shape whose height in a direction along its central axis RX is smaller than the diameter. The screw 41 has a grooved face 42 having a screw groove 45 formed therein at a face opposed to the barrel 50. Specifically, the grooved face 42 is opposed to a screw opposed face 52 of the barrel 50 to be described later. The central axis RX of this embodiment coincides with the rotational axis of the screw 41. A detailed configuration of the screw 41 at the grooved face 42 side will be described later.

The drive motor 32 is coupled to a face at an opposite side to the grooved face 42 of the screw 41. The drive motor 32 is driven under the control of the control unit 300. The screw 41 is rotated around the central axis RX by a torque generated by rotation of the drive motor 32. The drive motor 32 need not be directly coupled to the screw 41, and may be coupled through, for example, a decelerator.

The barrel 50 has a screw opposed face 52 opposed to the grooved face 42 of the screw 41. The case portion 91 is disposed so as to cover a face opposite side to the screw opposed face 52 of the barrel 50, that is, the lower face of the barrel 50. The communication hole 56 and the opening portion 94 are provided at a position overlapped with the central axis RX of the screw 41. That is, the through hole 80 is located at a position overlapped with the central axis RX.

The nozzle tip 60 is detachably attached to the through hole 80 of the heating block 90 as described above.

The nozzle tip 60 is provided with the nozzle flow channel 61 described above. The nozzle flow channel 61 has a nozzle opening 63 at the front end of the nozzle tip 60, and a flow inlet 65 at the rear end of the nozzle tip 60. In this embodiment, the nozzle opening 63 is located at a position in the -Z direction of the flow inlet 65. The nozzle tip 60 of this embodiment ejects the material flowing in the nozzle flow channel 61 through the through hole 80 and the flow inlet 65 to the stage 220 from the nozzle opening 63.

In this embodiment, the first nozzle tip 60a is attached to the first heating block 90a of the first ejection portion 100a and ejects the first material supplied from the first material storage portion 20a. The second nozzle tip 60b is attached to the second heating block 90b of the second ejection portion 100b and ejects the second material supplied from the second material storage portion 20b.

Between the nozzle tips 60, the nozzle tip 60 that ejects the material for forming an intended shape is sometimes referred to as "main tip". Further, the nozzle tip 60 that ejects the material for holding the shape of the shaped article in the middle of shaping is sometimes referred to as "tip for a support". The nozzle tip 60 that ejects the soluble support material is sometimes particularly referred to as "tip for a soluble support". The material to be ejected from the tip for a support need not be the support material, and for example, even if the first material and the second material are the same shaping material, the first nozzle tip 60a can be used as the main tip, and the second nozzle tip 60b can be used as the tip for a support.

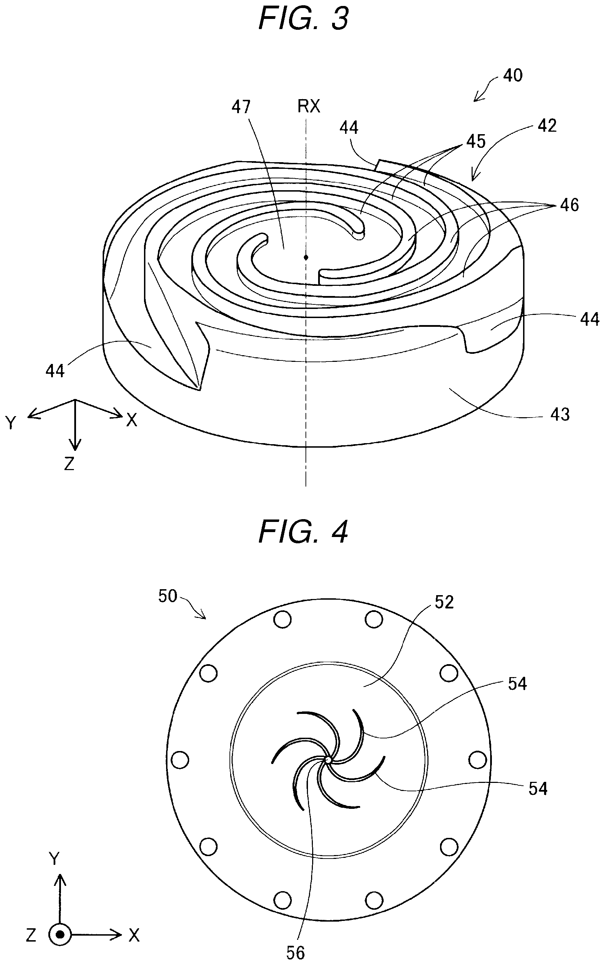

FIG. 3 is a schematic perspective view showing a configuration of the screw 41 at the grooved face 42 side. In FIG. 3, the position of the central axis RX of the screw 41 is indicated by a long dashed short dashed line. As described above, in the grooved face 42, the screw groove 45 is provided. A screw central portion 47 that is a central portion of the grooved face 42 of the screw 41 is configured as a recess to which one end of the screw groove 45 is coupled. The screw central portion 47 is opposed to the communication hole 56 of the barrel 50 shown in FIG. 1. The screw central portion 47 crosses the central axis RX.

The screw groove 45 of the screw 41 constitutes a so-called scroll groove. The screw groove 45 extends in a spiral shape so as to draw an arc toward the outer circumference of the screw 41 from the screw central portion 47. The screw groove 45 may be configured to extend in an involute curve shape or in a helical shape. In the grooved face 42, a projecting ridge portion 46 that constitutes a side wall portion of the screw groove 45 and that extends along each screw groove 45 is provided. The screw groove 45 continues to a material inlet 44 formed in a side face 43 of the screw 41. This material inlet 44 is a portion for receiving the material supplied through the supply channel 22 of the material storage portion 20.

In FIG. 3, an example of the screw 41 having three screw grooves 45 and three projecting ridge portions 46 is shown. The number of screw grooves 45 or projecting ridge portions 46 provided in the screw 41 is not limited to 3, and only one screw groove 45 may be provided, or two or more multiple screw grooves 45 may be provided. Further, in FIG. 3, an example of the screw 41 in which the material inlet 44 is formed at three sites is shown. The number of sites at which the material inlet 44 is provided in the screw 41 is not limited to 3, and the material inlet 44 may be provided at only one site or may be provided at two or more multiple sites.

FIG. 4 is a top view showing a configuration of the barrel 50 at the screw opposed face 52 side. As described above, at the center of the screw opposed face 52, the communication hole 56 is formed. Around the communication hole 56 in the screw opposed face 52, multiple guide grooves 54 are formed. One end of each of the guide grooves 54 is coupled to the communication hole 56, and each guide groove 54 extends in a spiral shape toward the outer circumference of the screw opposed face 52 from the communication hole 56. Each guide groove 54 has a function of guiding the shaping material to the communication hole 56. One end of the guide groove 54 need not be coupled to the communication hole 56. Further, in the barrel 50, the guide groove 54 need not be formed.

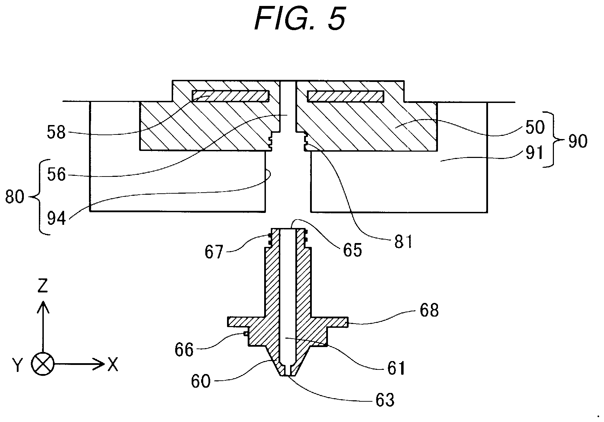

FIG. 5 is a view for illustrating the attachment/detachment of the nozzle tip 60 to/from the through hole 80. In FIG. 5, the nozzle tip 60 in a state of being detached from the through hole 80 is shown. In this embodiment, a nozzle threaded portion 67 is formed in a portion to be coupled to the through hole 80 of the nozzle tip 60, and a through hole threaded portion 81 to be screwed to the nozzle threaded portion 67 is provided in a portion to be coupled to the nozzle tip 60 of the through hole 80. The nozzle tip 60 is attached to the heating block 90 by inserting the nozzle tip 60 into the through hole 80 and screwing the nozzle threaded portion 67 and the through hole threaded portion 81 to each other. Further, the nozzle tip 60 is detached from the heating block 90 by unscrewing the nozzle threaded portion 67 and the through hole threaded portion 81 from each other and pulling out the nozzle tip 60 from the through hole 80. In this embodiment, the nozzle tip 60 is located below the barrel 50 and attached to the heating block 90 so that the communication hole 56 and the nozzle flow channel 61 communicate with each other.

The nozzle tip 60 has a shield 68. The shield 68 suppresses the transfer of heat of the heating block 90 to the stacked material. Specifically, the shield 68 is formed as a portion having a larger area of the cross section along the X direction and the Y direction as compared to the other portions in the Z direction that is a direction along the nozzle flow channel 61. The shield 68 suppresses the transfer of heat from the heating block 90 to the stacked material by being located between the heating block 90 and the stacked material in the attached state.

The shield 68 is, for example, formed of stainless steel or the like generally having a low emissivity. The shield 68 may be formed of, for example, a material other than stainless steel, and for example, by forming the shield 68 from aluminum or the like having a lower emissivity than stainless steel, an effect of suppressing heat transfer to the stacked material by thermal radiation of the heating block 90 is further enhanced. In addition, for example, by forming the shield 68 from polytetrafluoroethylene (PTFE) or the like generally having a low thermal conductivity, thermal conduction to the shield 68 from the heating block 90 is further suppressed. The shield 68 may be formed integrally with the nozzle tip 60 or may be formed as a separate body. Further, the shield 68 may be formed of multiple materials.

As shown in FIG. 2, in this embodiment, a gap Gp is formed between the shield 68 and the heating block 90. The gap Gp suppresses the thermal conduction to the shield 68 from the heating block 90 and further enhances the effect of suppressing heat transfer to the stacked material from the heating block 90 by the shield 68. In other embodiments, the gap Gp need not be formed between the shield 68 and the heating block 90, that is, the shield 68 and the heating block 90 may be in direct contact with each other.

As shown in FIG. 5, the nozzle tip 60 of this embodiment has a memory 66 constituted by an IC chip as a memory medium. The memory 66 functions as a nozzle information memory portion that stores the nozzle information of the nozzle tip 60. The nozzle information of the nozzle tip 60 is information regarding information for identifying the nozzle tip 60, and is, for example, the individual identification number of the nozzle tip 60. The memory 66 of this embodiment is electrically coupled to the control unit 300 through an unillustrated wiring and an unillustrated coupling portion by attaching the nozzle tip 60 to the heating block 90.

The memory 66 is located between the nozzle opening 63 and the shield 68 in the Z direction that is a direction along the nozzle flow channel 61. According to this, the shield 68 is located between the memory 66 and the heating block 90 in the attached state. Therefore, heat transfer to the memory 66 from the heating block 90 is suppressed by the shield 68 in the same manner as heat transfer to the stacked material from the heating block 90 is suppressed by the shield 68.

In this embodiment, the control unit 300 shown in FIG. 1 has an unillustrated auxiliary memory device. The control unit 300 acquires the nozzle information stored in the memory 66 of the nozzle tip 60 through the unillustrated wiring and the unillustrated coupling portion described above, and records the acquired nozzle information and a cumulative ejection amount in association with each other in the auxiliary memory device. The cumulative ejection amount is a cumulative value of the amount of the material ejected from the nozzle tip 60. The detailed cumulative ejection amount and the detailed association of the nozzle information with the cumulative ejection amount will be described later.

The notification portion 400 of this embodiment shown in FIG. 1 is constituted by a liquid crystal monitor and notifies information by displaying visual information on the liquid crystal monitor. The notification portion 400 notifies service life information that is information regarding the service life of the nozzle tip 60 as the information.

Further, the notification portion 400 of this embodiment notifies the cumulative ejection amount of the nozzle tip 60 described above and a maximum ejection amount of the nozzle tip 60 as the information. The maximum ejection amount is determined by an experiment or the like as a maximum amount of a material ejectable from the nozzle tip 60 when a certain material is continuously ejected from the nozzle tip 60. When the cumulative ejection amount of the nozzle tip 60 has reached the maximum ejection amount, due to nozzle clogging or the like, the possibility that the ejection performance of the nozzle tip 60 is deteriorated increases. The maximum ejection amount is, for example, determined for each type of material or each diameter of the nozzle opening 63 of the nozzle tip 60, and is recorded as a database in the auxiliary memory device of the control unit 300. The information regarding ejection of the material from the nozzle tip 60 such as the cumulative ejection amount or the maximum ejection amount is sometimes referred to as "ejection information". The notification portion 400 may notify, for example, the ratio of the cumulative ejection amount to the maximum ejection amount of the nozzle tip 60 other than the cumulative ejection amount or the maximum ejection amount as the ejection information. In addition, the notification portion 400 may notify, for example, information regarding the control state of the three-dimensional shaping apparatus 5 or the like other than the service life information or the ejection information.

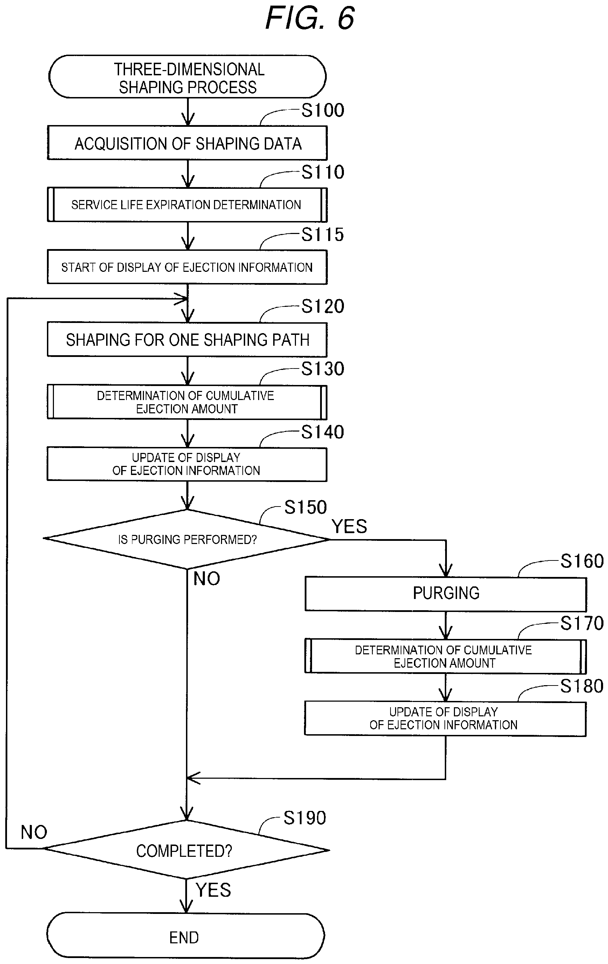

FIG. 6 is a process chart showing a three-dimensional shaping process in this embodiment. The three-dimensional shaping process refers to a process for shaping a three-dimensional shaped article. The control unit 300, for example, starts the three-dimensional shaping process when it receives a start command by a user through an unillustrated input portion or the like. In this embodiment, the control unit 300 controls, in the three-dimensional shaping process, the ejection portion 100 and the moving mechanism portion 210 based on the below-mentioned shaping data so as to move the nozzle tip for shaping that is the nozzle tip 60 attached to the heating block 90 with respect to the stage 220 and eject the plasticized material to the stage 220 from the nozzle tip for shaping, thereby stacking the plasticized material on the stage 220. More specifically, the control unit 300 shapes a three-dimensional shaped article by forming a layer of the material while solidifying the plasticized material ejected onto the stage 220. The "solidifying the material" means that the ejected plasticized material loses its fluidity. In this embodiment, the shaping material is thermally contracted and also loses its plasticity by cooling and thus is solidified.

In this embodiment, the control unit 300 ejects only one type of material from one nozzle tip 60 in the three-dimensional shaping process. That is, in this embodiment, the control unit 300 ejects only the first material from the first nozzle tip 60a, and ejects only the second material from the second nozzle tip 60b in the three-dimensional shaping process. The control unit 300 may execute a process for suppressing ejection of two or more types of materials from the nozzle tip 60. In this case, the control unit 300, for example, records the nozzle information of the nozzle tip for shaping and the type of material in association with each other in the unillustrated auxiliary memory device of the control unit 300, and may give a warning when it is predicted that a material that is not associated with the nozzle information is ejected from the nozzle tip for shaping.

In Step S100, the control unit 300 acquires shaping data. The control unit 300 acquires shaping data from, for example, an external computer or the like in Step S100. When the control unit 300 has a function of generating the shaping data, the control unit 300 may acquire the shaping data by reading the generated shaping data by itself. The shaping data includes path data including multiple shaping paths representing the movement path of the nozzle tip 60, and material data for determining the type and the ejection amount of the material to be ejected from the nozzle tip 60 in the shaping path.

In this embodiment, the shaping path designates the movement path of the nozzle tip for shaping by coordinate data that represent the start point and end point of the movement path. The material data of this embodiment designate the type of material in each shaping path and also designate the volume of the designated material to be ejected per unit movement amount, thereby determining the type and the ejection amount of the material to be ejected in the shaping path. More specifically, the material data of this embodiment designate the ejection portion 100 that ejects the material in each shaping path, thereby determining the type of material in the shaping path. Therefore, in this embodiment, the type of material stored in the material storage portion 20 and the ejection portion 100 to which the material is supplied from the material storage portion 20 are linked to each other in advance. The control unit 300 can, for example, link the type of material to the ejection portion 100 based on the information of the type of material stored in the material storage portion 20 input through the unillustrated input portion or the like.

Further, the shaping data of this embodiment include purge data that designate the type and the ejection amount of the material to be ejected in a purging process. The purging process is a process for ejecting a predetermined amount of a predetermined type of material from the nozzle tip for shaping in order to purge the nozzle flow channel 61. The purge data are, for example, configured to execute the purging process for every predetermined number of shaping paths or for every predetermined amount of the material. The purge data of this embodiment designate the type of material to be ejected in the purging process and also designate the volume of the material as the amount of the material in the purging process in the same manner as the material data.

In Step S110, the control unit 300 performs service life expiration determination. The service life expiration determination is a process for determining whether or not the service life of the nozzle tip for shaping has expired. The control unit 300 performs the service life expiration determination by executing a service life expiration determination process in Step S110.

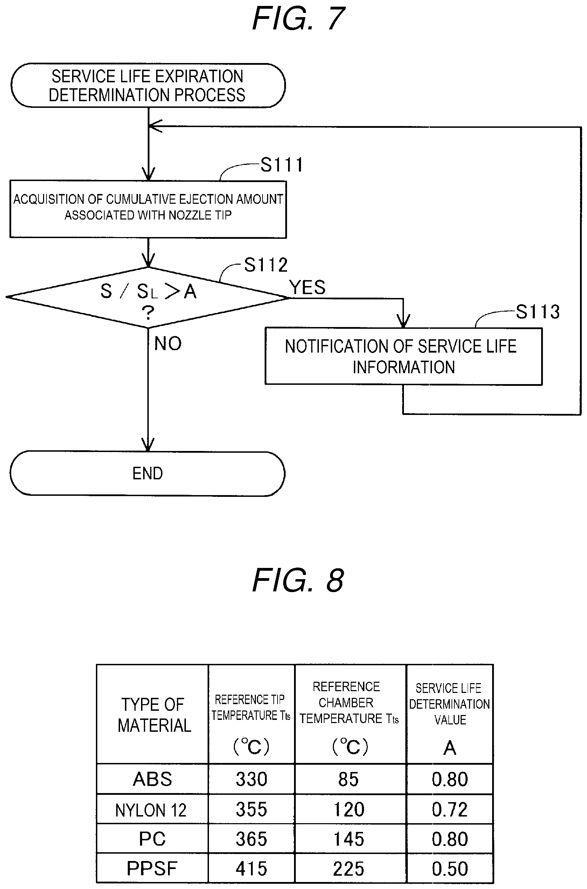

FIG. 7 is a process chart showing the service life expiration determination in this embodiment. In Step S111, the control unit 300 acquires the cumulative ejection amount associated with the nozzle tip for shaping. In this embodiment, the control unit 300 acquires the nozzle information of the nozzle tip for shaping and reads the cumulative ejection amount associated with the acquired nozzle information from the auxiliary memory device of the control unit 300 in Step S111. Specifically, the control unit 300 reads the cumulative ejection amount of the first nozzle tip 60a based on the nozzle information of the first nozzle tip 60a, and also reads the cumulative ejection amount of the second nozzle tip 60b based on the nozzle information of the second nozzle tip 60b in Step S111.

The cumulative ejection amount acquired by the control unit 300 in Step S111 is a cumulative ejection amount determined by a cumulative ejection amount determination process executed immediately before Step S111. More specifically, this cumulative ejection amount is a cumulative ejection amount determined by the last cumulative ejection amount determination process executed in another three-dimensional shaping process executed prior to Step S111. The cumulative ejection amount determination process is a process for determining the cumulative ejection amount of the nozzle tip for shaping to be executed by the control unit 300. The detailed cumulative ejection amount determination process will be described later. In Step S111, when the cumulative ejection amount is not associated with the nozzle information of the nozzle tip for shaping, the control unit 300 recognizes that the nozzle tip for shaping has never had the experience of ejecting the material and that the cumulative ejection amount of the nozzle tip for shaping is 0.

In Step S112, the control unit 300 determines whether or not a relationship among the cumulative ejection amount S acquired in Step S111, a maximum ejection amount $S_L$, and a service life determination value A satisfies the following formula (3).

$$S/S_L > A \qquad (3)$$

The control unit 300 determines that the service life of the nozzle tip for shaping has expired when the formula (3) is satisfied. In this embodiment, the control unit 300 performs the determination based on the formula (3) with respect to the first nozzle tip 60a and the second nozzle tip 60b. For example, when the cumulative ejection amount S of the first material ejected from the first nozzle tip 60a, and the maximum ejection amount $S_L$ when the first material is ejected from the first nozzle tip 60a, and the service life determination value A of the first material satisfy the relationship of the formula (3), it is determined that the service life of the first nozzle tip 60a has expired.

FIG. 8 is a table showing the service life determination value A. In FIG. 8, the service life determination values A of ABS, nylon 12, polycarbonate (PC), and polyphenylsulfone (PPSF) as the material are shown. The service life determination value A is a value found as a value capable of reducing the possibility that the ejection performance of the nozzle tip 60 during shaping of a three-dimensional shaped article is deteriorated when the three-dimensional shaped article is shaped by adjusting the temperature of the nozzle tip 60 to a reference tip temperature $T_{ts}$ [°C] and also adjusting the temperature in the chamber 110 to a reference chamber temperature $T_{cs}$ [°C], and also capable of using the nozzle tip 60 for as long as possible. That is, as the service life determination value A is smaller, it is determined that the service life of the nozzle tip 60 has expired in a state where there is more spare time by the time the cumulative ejection amount S has reached the maximum ejection amount $S_L$, and therefore, the possibility that the nozzle tip 60 causes nozzle clogging due to use over time during shaping of the three-dimensional shaped article becomes smaller. On the other hand, as the service life determination value A is smaller, the usable period of the nozzle tip 60 is shortened.

As shown in FIG. 8, the service life determination value A is determined for each type of material. Further, in FIG. 8, the above-mentioned reference tip temperature $T_{ts}$ and the reference chamber temperature $T_{cs}$ are shown. Each of the reference tip temperature $T_{ts}$ and the reference chamber temperature $T_{cs}$ is a temperature determined for each type of material as a temperature capable of keeping the shaping accuracy of the three-dimensional shaped article high.

In Step S112 in FIG. 7, when it is determined that the formula (3) is satisfied, in Step S113, the control unit 300 controls the notification portion 400 so as to notify the service life information of the nozzle tip for shaping. In this embodiment, the control unit 300 notifies that the service life of the nozzle tip 60 has expired by displaying a dialogue on the liquid crystal monitor constituting the notification portion 400 in Step S113. A user can, for example, replace the nozzle tip for shaping with another nozzle tip 60 whose service life has not expired based on the notified service life information. The control unit 300 may, for example, instruct the user to replace the nozzle tip for shaping in Step S113. Further, the control unit 300 may make the three-dimensional shaping apparatus 5 wait until the nozzle tip for shaping is replaced after Step S113. In this case, the control unit 300 may wait while displaying the dialogue showing the service life information on the liquid crystal monitor. In addition, the control unit 300 may, for example, end the service life expiration determination process when the nozzle tip for shaping is not replaced even when a predetermined time has elapsed in Step S113.

The control unit 300 returns the process to Step S111 after Step S113 and acquires the cumulative ejection amount associated with the nozzle tip 60 newly attached to the heating block 90 in the same manner. Thereafter, in Step S112, the control unit 300 determines whether or not the formula (3) is satisfied in the same manner.

When it is determined that the formula (3) is not satisfied in Step S112, the control unit 300 ends the service life expiration determination process and allows the process to proceed to Step S115 in FIG. 6. In Step S115, the control unit 300 controls the notification portion 400 so as to start displaying the ejection information.

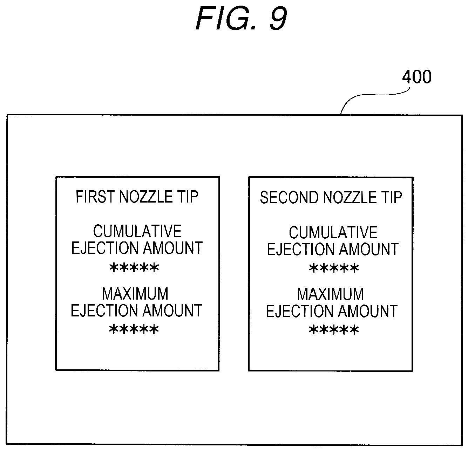

FIG. 9 is a view showing an example of the ejection information displayed on the notification portion 400. In this embodiment, after Step S115, the control unit 300 controls the notification portion 400 so as to keep the state where the ejection information as shown in FIG. 9 is displayed on the notification portion 400. As shown in FIG. 9, the control unit 300 allows the notification portion 400 to display the ejection information for each nozzle tip 60 attached to the heating block 90. The ejection information displayed on the notification portion 400 is updated by the control unit 300 in the below-mentioned Step S140 or Step S180.

In Step S120, the control unit 300 performs shaping for one shaping path included in the shaping data based on the shaping data acquired in Step S100.

In Step S130, the control unit 300 determines the cumulative ejection amount of the material ejected from the nozzle tip for shaping. The control unit 300 determines the cumulative ejection amount by executing the cumulative ejection amount determination process in Step S130. Note that in this embodiment, the cumulative ejection amount is represented as the volume of the material. Further, in this embodiment, the cumulative ejection amount is determined by calculation by the control unit 300 as described later.

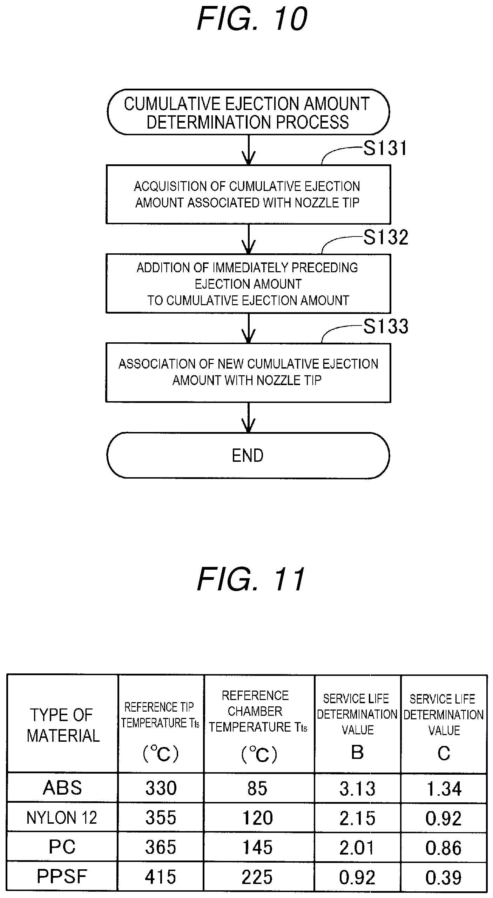

FIG. 10 is a process chart showing the cumulative ejection amount determination process in this embodiment. In Step S131, the control unit 300 acquires the cumulative ejection amount associated with the nozzle tip for shaping that has ejected the material immediately before. In this embodiment, in Step S131, the control unit 300 reads the cumulative ejection amount recorded in the auxiliary memory device of the control unit 300 in the same manner as in Step S111 in FIG. 7 based on the nozzle information stored in the memory 66 of the nozzle tip for shaping that has ejected the material in Step S120. For example, when the first nozzle tip 60a has ejected the first material in Step S120, the control unit 300 reads the cumulative ejection amount of the first nozzle tip 60a based on the nozzle information of the first nozzle tip 60a in Step S131.

In Step S132, the control unit 300 newly calculates the cumulative ejection amount by adding the ejection amount of the material ejected from the nozzle tip for shaping immediately before to the cumulative ejection amount read in Step S131. In this embodiment, the control unit 300 calculates the new cumulative ejection amount based on the material data of the shaping data in Step S132. More specifically, for example, when the first nozzle tip 60a has ejected the first material in Step S120, the control unit 300 acquires the volume of the first material for performing shaping in Step S120 designated by the shaping data as the ejection amount of the first material ejected from the first nozzle tip 60a in Step S120. Then, the control unit 300 calculates and determines the new cumulative ejection amount of the first nozzle tip 60a by adding the acquired ejection amount to the cumulative ejection amount of the first nozzle tip 60a read in Step S131.

In Step S133, the control unit 300 determines the cumulative ejection amount by associating the new cumulative ejection amount calculated in Step S132 and the nozzle tip for shaping again with each other. In this embodiment, in Step S133, the control unit 300 determines the cumulative ejection amount by overwriting the new cumulative ejection amount calculated in Step S132 on the cumulative ejection amount originally recorded in the auxiliary memory device in association with the nozzle information of the nozzle tip for shaping.

In Step S140, the control unit 300 updates the display of the ejection information based on the cumulative ejection amount determined in Step S130. For example, when the cumulative ejection amount of the first nozzle tip 60a is determined in Step S130, the control unit 300 controls the notification portion 400 in Step S140 so as to start displaying the new cumulative ejection amount determined in Step S130 as the cumulative ejection amount of the first nozzle tip 60a shown in FIG. 9.

In Step S150 in FIG. 6, the control unit 300 determines whether or not the purging process is performed. In this embodiment, the control unit 300 determines whether or not it is time to perform the purging process based on the above-mentioned purge data in Step S150. When it is determined that the purging process is not performed in Step S150, the control unit 300 allows the process to proceed to Step S190. When it is determined that the purging process is performed in Step S150, the control unit 300 performs the purging process in Step S160. In this embodiment, the control unit 300 ejects the material having a volume designated by the purge data in Step S160.

In Step S170, the control unit 300 determines the cumulative ejection amount by executing the cumulative ejection amount determination process shown in FIG. 10 in the same manner as in Step S130. In the cumulative ejection amount determination process executed in Step S170, in Step S132 in FIG. 10, the control unit 300 calculates and determines a new cumulative ejection amount by adding the ejection amount of the material ejected from the nozzle tip for shaping in the purging process in Step S160 to the cumulative ejection amount read in Step S131. In Step S180, the control unit 300 updates the display of the ejection information in the same manner as in Step S140.

In Step S190, the control unit 300 determines whether or not the three-dimensional shaped article is completed. In this embodiment, the control unit 300 determines that the three-dimensional shaped article is completed when shaping is performed for all the shaping paths included in the shaping data in Step S190. When it is determined that the three-dimensional shaped article is completed in Step S190, the control unit 300 ends the three-dimensional shaping process. When it is determined that the three-dimensional shaped article is not completed in Step S190, the control unit 300 returns the process to Step S120, and performs shaping for the subsequent one shaping path. In this manner, the control unit 300 completes the three-dimensional shaped article by repeatedly executing the process from Step S120 to Step S180 until shaping is performed for all the shaping paths. The cumulative ejection amount of the nozzle tip 60 finally determined in the three-dimensional shaping process is used for the service life expiration determination of the nozzle tip 60 in the subsequent three-dimensional shaping process using the same nozzle tip 60 and thereafter.

In other embodiments, the control unit 300 may, for example, execute the service life expiration determination in the same manner as the service life expiration determination shown in Step S110 every time after the cumulative ejection amount is determined in Step S130 or Step S160 shown in FIG. 6. In this case, it is determined whether or not the service life of the nozzle tip for shaping has expired every time after the cumulative ejection amount of the nozzle tip for shaping is updated. Therefore, by replacing the nozzle tip for shaping for which it is determined that the service life has expired at this timing is replaced with another nozzle tip 60, the possibility that nozzle clogging is unexpectedly caused during shaping of the three-dimensional shaped article can be further reduced.

According to the three-dimensional shaping apparatus 5 of this embodiment described above, the nozzle tip 60 has the shield 68 for suppressing the transfer of heat from the heating block 90 to the stacked material, and the control unit 300 determines the cumulative ejection amount of the material ejected from the nozzle tip for shaping. Therefore, by the shield 68, the transfer of heat of the heating block 90 to the stacked material is suppressed so as to suppress deformation of the three-dimensional shaped article. Further, by executing replacement of the nozzle tip for shaping or the like prior to shaping of the three-dimensional shaped article based on the determined cumulative ejection amount of the material, the possibility that nozzle clogging is unexpectedly caused during shaping of the three-dimensional shaped article can be reduced.

Further, in this embodiment, the control unit 300 determines the cumulative ejection amount based on the ejection amount of the material calculated based on the shaping data. Therefore, the cumulative ejection amount can be simply determined based on the shaping data for shaping the three-dimensional shaped article.

Further, in this embodiment, the control unit 300 records the nozzle tip for shaping and the determined cumulative ejection amount in association with each other. Therefore, for example, even when the nozzle tip 60 is once detached from the heating block 90 and another nozzle tip 60 is attached to the heating block 90, or when multiple nozzle tips 60 are attached to the heating block 90, the cumulative ejection amount of the nozzle tip for shaping can be recorded.

Further, in this embodiment, the control unit 300 acquires the cumulative ejection amount associated with the nozzle tip for shaping, calculates and determines a new cumulative ejection amount by adding the amount of the material ejected by the nozzle tip for shaping to the acquired cumulative ejection amount, and records the new cumulative ejection amount and the nozzle tip for shaping in association with each other. Therefore, even when the nozzle tip 60 is once detached from the heating block 90 and another nozzle tip 60 is attached to the heating block 90, or when multiple nozzle tips 60 are attached to the heating block 90, the cumulative ejection amount associated with the nozzle tip for shaping can be updated by a simple method.

Further, in this embodiment, the nozzle tip 60 has the nozzle information memory portion. Therefore, the control unit 300 can record the nozzle tip for shaping and the cumulative ejection amount in association with each other by associating the nozzle information of the nozzle tip for shaping and the cumulative ejection amount with each other.

Further, in this embodiment, the nozzle information memory portion is located between the nozzle opening 63 and the shield 68 in the Z direction. Therefore, in the attached state, heat transfer to the nozzle information memory portion from the heating block 90 is suppressed by the shield 68.

FIG. 11 is a table showing a service life determination value B and a service life determination value C. In other embodiments, for example, the control unit 300 may determine the service life of the nozzle tip 60 based on a relational formula other than the above formula (3) in Step S112 in FIG. 7. For example, when the control unit 300 shapes a three-dimensional shaped article in the three-dimensional shaping process by controlling the heater 58 of the heating block 90 so as to adjust the temperature of the nozzle tip for shaping to a tip temperature Tt [°C] and also controlling the chamber heating portion 115 so as to adjust the temperature of the shaping space 111 to a chamber temperature $T_c$ [°C], the control unit 300 may determine that the service life of the nozzle tip 60 has expired when a relationship among the cumulative ejection amount S, the maximum ejection amount $S_L$, the tip temperature Tt, the chamber temperature $T_c$, and the service life determination value B shown in FIG. 11 satisfies the following formula (4) in Step S112 in FIG. 7.

$$(S/S_L) \times (T_t/T_c) > B \qquad (4)$$

Note that the tip temperature Tt is a higher temperature than the chamber temperature $T_c$.

The service life determination value B shown in FIG. 11 is a value represented by the following formula (5).

$$B = A \times T_{ts}/T_{cs} \qquad (5)$$

Therefore, the formula (4) can be transformed into the following formula (6) using the service life determination value A.

$$(S/S_L) \times (T_t/T_c) > A \times (T_{ts}/T_{cs}) \qquad (6)$$

That is, when the service life expiration determination of the nozzle tip for shaping is performed based on the formula (4), it may be determined that the service life of the nozzle tip 60 has expired even at a stage where the cumulative ejection amount S is small when the value of $T_t/T_c$ is larger than the value of $T_{ts}/T_{cs}$ as compared to a case where the service life expiration determination is performed based on the formula (3). For example, even when the chamber temperature $T_c$ is the same, if the tip temperature Tt is higher, $T_t/T_c$ takes a larger value. In this case, the material in the nozzle flow channel 61 of the nozzle tip 60 tends to be degenerated by being exposed to a high temperature, and nozzle clogging when used over time is easily caused. Further, the state where $T_t/T_c$ is large represents a state where a temperature difference between the temperature of the nozzle flow channel 61 and the temperature of the shaping space 111 is larger. Therefore, in this state, the properties such as plasticity of the material tend to be changed by the temperature change due to the temperature difference between the nozzle flow channel 61 and the shaping space 111 particularly in the vicinity of the nozzle opening 63. Therefore, the material tends to adhere to the vicinity of the nozzle opening 63, and nozzle clogging when used over time is more easily caused. The control unit 300 can determine whether or not the service life of the nozzle tip for shaping has expired under conditions taking into account the temperature condition during shaping by performing the service life expiration determination of the nozzle tip for shaping based on the formula (4).

Further, when the control unit 300 shapes a three-dimensional shaped article in the three-dimensional shaping process by controlling the heater 58 of the heating block 90 so as to adjust the temperature of the nozzle tip for shaping to the tip temperature Tt [°C] and also controlling the chamber heating portion 115 so as to adjust the temperature of the shaping space 111 to the chamber temperature $T_c$ [°C] in the same manner, the control unit 300 may determine that the service life of the nozzle tip for shaping has expired when a relationship among the cumulative ejection amount S, the maximum ejection amount $S_L$, the tip temperature Tt, the chamber temperature $T_c$, an ejection time $t_v$, a waiting time $t_w$, and the service life determination value C shown in FIG. 11 satisfies the following formula (7) in Step S112 in FIG. 7.

$$(S/S_L) \times (T_t/T_c) \times (t_v/t_w) > C \qquad (7)$$

The ejection time $t_v$ refers to a time in which the nozzle tip for shaping ejects the material in an activation time that is a time in which the three-dimensional shaping apparatus 5 is in an activation state. The activation state of the three-dimensional shaping apparatus 5 is, for example, a state where at least one of the heater of the heating block 90 and the chamber heating portion 115 is turned on so as to heat the nozzle tip for shaping or the shaping space 111. Further, the waiting time $t_w$ refers to a time in which the nozzle tip for shaping waits without ejecting the material in the activation time of the three-dimensional shaping apparatus 5. For example, in the waiting time of the first nozzle tip 60a, a time in which the second nozzle tip 60b ejects the second material and the first nozzle tip 60a does not eject the first material, a time in which both the second nozzle tip 60b and the first nozzle tip 60a do not eject the material, and the like in the activation time of the three-dimensional shaping apparatus 5 are included. That is, it can also be said that the waiting time $t_w$ is a time obtained by subtracting the ejection time $t_v$ from the activation time of the three-dimensional shaping apparatus 5. Therefore, the control unit 300 can calculate the waiting time $t_w$ by, for example, measuring the activation time of the three-dimensional shaping apparatus 5 and the ejection time $t_v$ and subtracting the ejection time $t_v$ from the activation time of the three-dimensional shaping apparatus 5. The ejection time $t_v$ and the waiting time $t_w$ are, for example, recorded in association with the nozzle tip for shaping in the same manner as the cumulative ejection amount information.

The service life determination value C shown in FIG. 11 is a value represented by the following formula (8).

$$C = 0.42 \times A \times (T_{ts}/T_{cs}) \qquad (8)$$

Therefore, the above formula (8) can be transformed into the following formula (9) using the service life determination value A.

$$(S/S_L) \times (T_t/T_c) \times (t_v/t_w) > 0.42 \times A \times (T_{ts}/T_{cs}) \quad (9)$$

That is, when the service life expiration determination of the nozzle tip for shaping is performed based on the formula (7), it may be determined that the service life of the nozzle tip for shaping has expired even at a stage where the cumulative ejection amount S is small when the value of $(T_t/T_c) \times (t_v/t_w)$ is larger than the value of $0.42 \times T_{ts}/T_{cs}$ as compared to a case where the service life expiration determination is performed based on the formula (3).

In the formula (9), when the value of $t_v/t_w$ is 0.42, in the same manner as in a case where the service life expiration determination is performed based on the formula (4), it may be determined that the service life of the nozzle tip for shaping has expired even at a stage where the cumulative ejection amount S is small when the value of $T_t/T_c$ is larger than the value of $T_{ts}/T_{cs}$. Further, when the value of $T_t/T_c$ and the value of $T_{ts}/T_{cs}$ are equal, it may be determined that the service life of the nozzle tip for shaping has expired even at a stage where the cumulative ejection amount S is small when the value of $t_v/t_w$ is larger than 0.42. The value of $t_v/t_w$ takes a larger value as the ejection time $t_v$ is relatively longer than the waiting time $t_w$. In this case, a time in which the material is ejected from the nozzle tip 60 during shaping of the three-dimensional shaped article becomes longer, and therefore, a time in which the material flows in the nozzle flow channel 61 becomes longer. Due to this, the possibility that the material adheres to the channel wall of the nozzle flow channel 61 or the like increases, and nozzle clogging when used over time is more easily caused. The control unit 300 can determine whether or not the service life of the nozzle tip for shaping has expired under conditions taking into account the temperature condition during shaping and the balance between the ejection time $t_v$ and the waiting time $t_w$ of the nozzle tip for shaping by performing the service life expiration determination of the nozzle tip for shaping based on the formula (7). Note that the value of 0.42 in the formula (8) is a value determined as a ratio of the ejection time to the waiting time of the nozzle tip for shaping in general three-dimensional shaping. Further, when the value of $t_v/t_w$ is 0.42, the ratio of the ejection time $t_v$ to the waiting time $t_w$ of the nozzle tip for shaping becomes about 3 to 7.

B. Second Embodiment

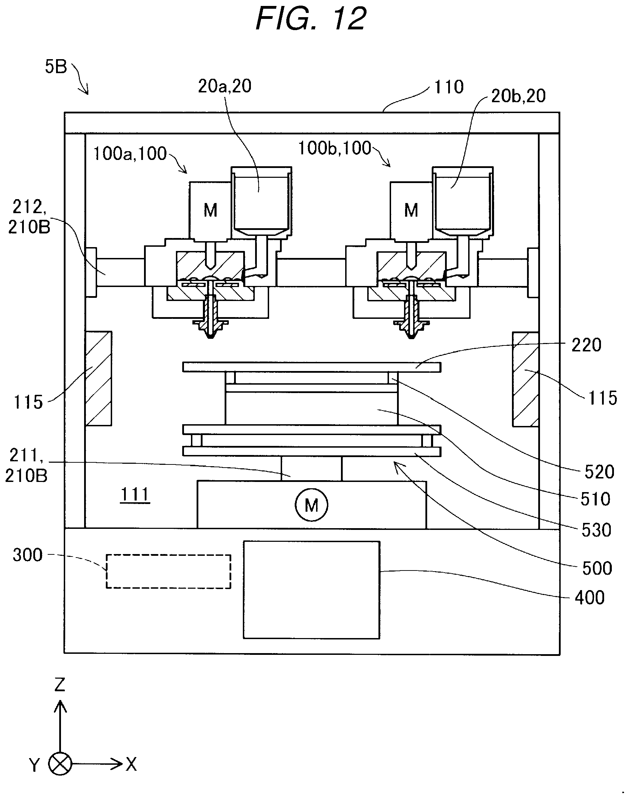

FIG. 12 is a view showing a schematic configuration of a three-dimensional shaping apparatus 5B according to a second embodiment. In this embodiment, the control unit 300 determines the cumulative ejection amount based on the amount of the material ejected to the stage 220 from the nozzle tip for shaping unlike the first embodiment. Portions that are not particularly described in the configuration of the three-dimensional shaping apparatus 5B of this embodiment are the same as those of the first embodiment.

A moving mechanism portion 210B of this embodiment changes the relative position of the ejection portion 100 and the stage 220 by moving each of the ejection portion 100 and the stage 220. In this embodiment, the moving mechanism portion 210B is constituted by a first moving mechanism portion 211 that moves the stage 220, and a second moving mechanism portion 212 that moves the ejection portion 100. The first moving mechanism portion 211 is configured to be able to move the stage 220 in the Z direction. The second moving mechanism portion 212 is configured to be able to move the ejection portion 100 in two axis directions: X and Y directions. The first moving mechanism portion 211 and the second moving mechanism portion 212 move by the driving forces of motors that drive these portions, respectively. Each motor drives under the control of the control unit 300.

The three-dimensional shaping apparatus 5B includes a measurement portion 500 that measures the amount of the material ejected to the stage 220 from the nozzle tip for shaping. The measurement portion 500 of this embodiment is configured as a weight meter including a weight sensor 510 that measures the weight of the material ejected to the stage 220 from the nozzle tip for shaping. That is, the measurement portion 500 of this embodiment measures the weight of the material as the amount of the material.

The measurement portion 500 of this embodiment includes the above-mentioned weight sensor 510, a heat insulating portion 520, and a support portion 530. The support portion 530 is coupled to the first moving mechanism portion 211 and also supports the weight sensor 510 from below. The weight sensor 510 is a load cell-type weight sensor and measures the weight of the plasticized material ejected onto the stage 220. The heat insulating portion 520 couples the weight sensor 510 to the stage 220. The heat insulating portion 520 supports the stage 220 from below and also suppresses heat transfer to the weight sensor 510 from the stage 220. The control unit 300 acquires the weight measured by the weight sensor 510 through an unillustrated wiring. In other embodiments, the weight sensor 510 may be a weight sensor other than the load cell-type weight sensor, and for example, may be an electromagnetic force balance-type weight sensor or a metal tuning fork-type sensor.

In this embodiment, the control unit 300 executes the same process as the three-dimensional shaping process shown in FIG. 6. Therefore, in Step S130 and Step S170 in FIG. 6, the control unit 300 executes the same process as the cumulative ejection amount determination process shown in FIG. 10. The control unit 300 determines the new cumulative ejection amount S based on the amount of the material ejected to the stage 220 from the nozzle tip for shaping in Step S142. More specifically, for example, when the first nozzle tip 60a ejects the first material in Step S120, the control unit 300 acquires the weight of the first material ejected onto the stage 220 measured by the measurement portion 500 in Step S132. Further, the control unit 300 calculates the volume of the first material as the ejection amount of the first material ejected onto the stage 220 by dividing the acquired weight by the density of the first material, and the new cumulative ejection amount of the first nozzle tip 60a is calculated and determined by adding the calculated ejection amount to the cumulative ejection amount of the first nozzle tip 60a read in Step S131.

According also to the three-dimensional shaping apparatus 5B of this embodiment described above, heat transfer to the stacked material from the heating block 90 is suppressed by the shield 68 so as to suppress deformation of the three-dimensional shaped article. Further, by executing replacement of the nozzle tip for shaping or the like prior to shaping of the three-dimensional shaped article based on the determined cumulative ejection amount of the material, the possibility that nozzle clogging is unexpectedly caused during shaping of the three-dimensional shaped article can be reduced. In particular, in this embodiment, the control unit 300 determines the cumulative ejection amount based on the amount of the plasticized material ejected to the stage 220. According to this, the cumulative ejection amount can be determined based on the actual measurement value regarding the ejection amount of the material ejected from the nozzle tip for shaping. Therefore, for example, the accuracy of the service life expiration determination of the nozzle tip for shaping can be enhanced.

In other embodiments, the measurement portion 500, for example, need not be configured as a weight meter. For example, the measurement portion 500 may be configured as one or multiple cameras that photograph the material ejected to the stage 220 from the nozzle tip for shaping. In this case, for example, in the cumulative ejection amount determination process, the control unit 300 may calculate the volume of the material ejected to the stage 220 from the nozzle tip for shaping by analyzing the image data photographed by the measurement portion 500. In this case, the control unit 300 can, for example, calculate and determine the new cumulative ejection amount of the nozzle tip for shaping by adding the calculated volume to the cumulative ejection amount of the nozzle tip for shaping read in Step S131. Even in such a configuration, the control unit 300 can determine the new cumulative ejection amount based on the amount of the material ejected to the stage 220 from the nozzle tip for shaping in the cumulative ejection amount determination process.

C. Third Embodiment

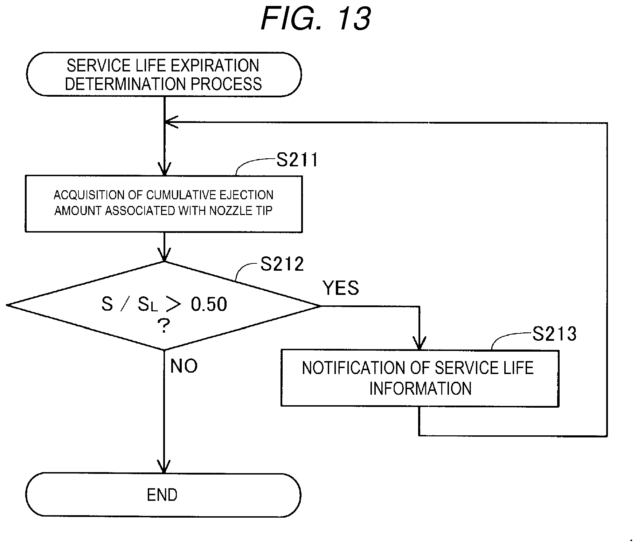

FIG. 13 is a process chart showing a service life expiration determination process in a third embodiment. In this embodiment, the condition for determining that the service life of the nozzle tip for shaping has expired is different from that of the first embodiment. Portions that are not particularly described in the configuration of the three-dimensional shaping apparatus 5 of this embodiment are the same as those of the first embodiment. Further, in this embodiment, the control unit 300 executes the same process as the three-dimensional shaping process shown in FIG. 6.

The control unit 300 executes the service life expiration determination process shown in FIG. 13 in Step S110 in FIG. 6. Step S211 is the same as Step S111 in FIG. 7. In Step S212 in FIG. 13, the control unit 300 determines whether or not a relationship between the cumulative ejection amount S acquired in Step S211 and a maximum ejection amount $S_L$ satisfies the following formula (10) unlike the first embodiment.

$$S/S_L > 0.50 \qquad (10)$$

The control unit 300 determines that the service life of the nozzle tip for shaping has expired when the formula (10) is satisfied. As shown in the formula (10), in this embodiment, the control unit 300 performs the service life expiration determination based on a given service life determination value regardless of the type of material instead of the service life determination value A which differs depending on the type of material unlike the first embodiment. That is, the service life determination value in this embodiment is 0.50 regardless of the type of material. More specifically, the formula (10) is equivalent to the case where the value of the service life determination value A in the formula (3) is set to 0.50 regardless of the type of material.

As shown in FIG. 8, among the service life determination values A of the respective materials, the service life determination value A of PPSF is the smallest, and the value is 0.50. Therefore, by determining that the service life of the nozzle tip 60 has expired when the formula (10) is satisfied, the control unit 300 can suppress the occurrence of nozzle clogging during shaping of the three-dimensional shaped article by a simple method without making the determination criteria of the service life different for each type of material MF. For example, even if the type of material to be ejected by the nozzle tip for shaping is ABS, by determining that the service life of the nozzle tip for shaping has expired when the formula (10) is satisfied, the possibility that the control unit 300 can determine that the service life of the nozzle tip 60 has expired before the nozzle tip 60 causes nozzle clogging due to use over time is high. Step S213 is the same as Step S113 in FIG. 7.

According also to the three-dimensional shaping apparatus 5 of this embodiment described above, heat transfer to the stacked material from the heating block 90 is suppressed by the shield 68 so as to suppress deformation of the three-dimensional shaped article. Further, by executing replacement of the nozzle tip for shaping or the like prior to shaping of the three-dimensional shaped article based on the determined cumulative ejection amount of the material, the possibility that nozzle clogging is unexpectedly caused during shaping of the three-dimensional shaped article can be reduced. In particular, in this embodiment, the control unit 300 determines that the service life of the nozzle tip for shaping has expired when the formula (10) is satisfied. According to this, it can be simply determined whether or not the service life of the nozzle tip for shaping has expired without making the determination criteria different for each type of material. Therefore, the possibility that nozzle clogging is unexpectedly caused during shaping of the three-dimensional shaped article can be simply reduced.

In other embodiments, when it is determined whether or not the service life of the nozzle tip for shaping has expired based on a given service life determination value regardless of the type of material in the same manner as in the above-mentioned third embodiment, the service life determination value may be a numerical value other than 0.50. For example, the service life determination value may be 0.80. Even in such a case, the control unit 300 can determine that the service life of the nozzle tip for shaping has expired before the cumulative ejection amount S of the nozzle tip for shaping reaches the maximum ejection amount $S_L$ in the service life expiration determination process, and therefore, the possibility that nozzle clogging is unexpectedly caused during shaping of the three-dimensional shaped article can be reduced. In this case, the service life determination value is preferably a value less than 1.0 in order to suppress the occurrence of nozzle clogging during three-dimensional shaping, and is preferably a value of 0.50 or more in order to use the nozzle tip 60 for as long as possible.

Further, in this case, for example, the service life determination value may be made different between a case where the nozzle tip for shaping is the main tip and a case where the nozzle tip for shaping is the tip for a support. For example, the service life determination value of the main tip may be set to 0.80, and the service life determination value of the tip for a support may be set to 0.60 which is lower than the service life determination value of the main tip. By setting the service life determination value of the tip for a support to a value smaller than the service life determination value of the main tip in this manner, the service life of the tip for a support is determined to be shorter than the service life of the main tip, and therefore, the possibility that nozzle clogging of the tip for a support is unexpectedly caused during shaping of the three-dimensional shaped article can be further reduced.

D. Fourth Embodiment

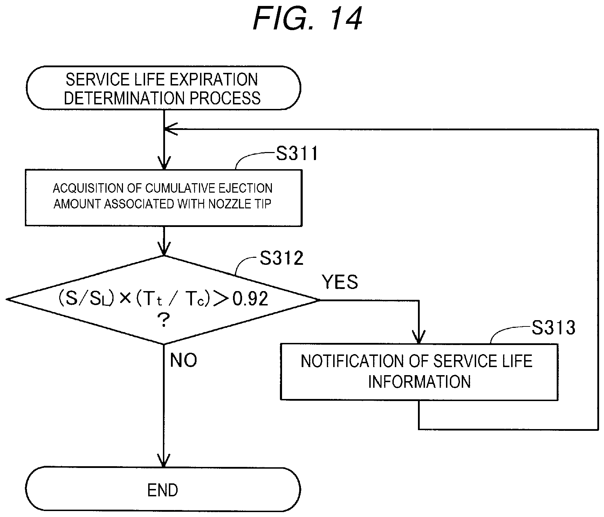

FIG. 14 is a process chart showing a service life expiration determination process in a fourth embodiment. In this embodiment, the condition for determining that the service life of the nozzle tip for shaping has expired is different from that of the first embodiment. Portions that are not particularly described in the configuration of the three-dimensional shaping apparatus 5 of this embodiment are the same as those of the first embodiment. Further, in this embodiment, the control unit 300 executes the same process as the three-dimensional shaping process shown in FIG. 6.

In this embodiment, the control unit 300 shapes a three-dimensional shaped article in the three-dimensional shaping process by controlling the heater 58 of the heating block 90 so as to adjust the temperature of the nozzle tip for shaping to the tip temperature $T_t$ [°C] and also controlling the chamber heating portion 115 so as to adjust the temperature of the shaping space 111 to the chamber temperature $T_c$ [°C].

The control unit 300 executes the service life expiration determination process shown in FIG. 14 in Step S110 in FIG. 6. Step S311 is the same as Step S111 in FIG. 7. In Step S312 in FIG. 14, the control unit 300 determines whether or not a relationship among the cumulative ejection amount S acquired in Step S311, the maximum ejection amount $S_L$, the tip temperature Tt, and the chamber temperature $T_c$ satisfies the following formula (1) unlike the first embodiment.

$$(S/S_L) \times (T_t/T_c) > 0.92 \qquad (1)$$

The control unit 300 determines that the service life of the nozzle tip for shaping has expired when the formula (1) is satisfied. That is, in this embodiment, the control unit 300 performs the service life expiration determination based on a given service life determination value regardless of the type of material instead of the service life determination value A which differs depending on the type of material unlike the first embodiment. That is, the service life determination value in this embodiment is 0.92 regardless of the type of material. More specifically, the formula (1) is equivalent to the case where the value of the service life determination value B in the formula (4) is set to 0.92 regardless of the type of material.

As shown in FIG. 11, among the service life determination values B of the respective materials, the service life determination value B of PPSF is the smallest, and the value is 0.92. Therefore, by determining that the service life of the nozzle tip for shaping has expired when the formula (1) is satisfied, the control unit 300 can suppress the occurrence of nozzle clogging during shaping of the three-dimensional shaped article by a simple method without making the determination criteria of the service life different for each type of material. Further, the control unit 300 can determine whether or not the service life of the nozzle tip for shaping has expired under conditions taking into account the temperature condition during shaping in the same manner as in a case where the service life expiration determination of the nozzle tip for shaping is performed based on the formula (4). Step S313 is the same as Step S113 in FIG. 7.

According also to the three-dimensional shaping apparatus 5 of this embodiment described above, heat transfer to the stacked material from the heating block 90 is suppressed by the shield 68 so as to suppress deformation of the three-dimensional shaped article. Further, by executing replacement of the nozzle tip for shaping or the like prior to shaping of the three-dimensional shaped article based on the determined cumulative ejection amount of the material, the possibility that nozzle clogging is unexpectedly caused during shaping of the three-dimensional shaped article can be reduced. In particular, in this embodiment, the control unit 300 determines that the service life of the nozzle tip for shaping has expired when the formula (1) is satisfied. According to this, it can be simply determined whether or not the service life of the nozzle tip for shaping has expired under conditions taking into account the temperature condition during shaping without making the determination criteria different for each type of material. Therefore, the possibility that nozzle clogging is unexpectedly caused during shaping of the three-dimensional shaped article can be simply reduced.

E. Fifth Embodiment

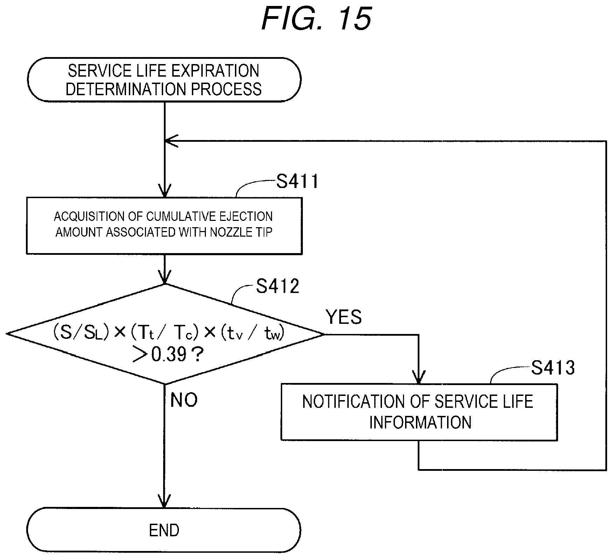

FIG. 15 is a process chart showing a service life expiration determination process in a fifth embodiment. In this embodiment, the condition for determining that the service life of the nozzle tip for shaping has expired is different from that of the first embodiment. Portions that are not particularly described in the configuration of the three-dimensional shaping apparatus 5 of this embodiment are the same as those of the first embodiment. Further, in this embodiment, the control unit 300 executes the same process as the three-dimensional shaping process shown in FIG. 6.

In this embodiment, the control unit 300 shapes a three-dimensional shaped article in the three-dimensional shaping process by controlling the heater 58 of the heating block 90 so as to adjust the temperature of the nozzle tip for shaping to the tip temperature $T_t$ [°C] and also controlling the chamber heating portion 115 so as to adjust the temperature of the shaping space 111 to the chamber temperature $T_c$ [°C] in the same manner as in the fourth embodiment.

The control unit 300 executes the service life expiration determination process shown in FIG. 15 in Step S110 in FIG. 6. Step S411 is the same as Step S111 in FIG. 7. In Step S412 in FIG. 15, the control unit 300 determines whether or not a relationship among the cumulative ejection amount S acquired in Step S411, the maximum ejection amount $S_L$, the tip temperature Tt, the chamber temperature $T_c$, the ejection time $t_v$, and the waiting time $t_w$ satisfies the following formula (2) unlike the first embodiment.

$$(S/S_L) \times (T_t/T_c) \times (t_v/t_w) > 0.39 \qquad (2)$$

The control unit 300 determines that the service life of the nozzle tip for shaping has expired when the formula (2) is satisfied. That is, in this embodiment, the control unit 300 performs the service life expiration determination based on a given service life determination value regardless of the type of material instead of the service life determination value A which differs depending on the type of material unlike the first embodiment. That is, the service life determination value in this embodiment is 0.39 regardless of the type of material. More specifically, the formula (2) is equivalent to the case where the value of the service life determination value C in the formula (7) is set to 0.39 regardless of the type of material.

As shown in FIG. 11, among the service life determination values C of the respective materials, the service life determination value C of PPSF is the smallest, and the value is 0.39. Therefore, by determining that the service life of the nozzle tip for shaping has expired when the formula (2) in which the service life determination value is set to 0.39 is satisfied, the control unit 300 can suppress the occurrence of nozzle clogging during shaping of the three-dimensional shaped article by a simple method without making the determination criteria of the service life different for each type of material. Further, the control unit 300 can determine whether or not the service life of the nozzle tip for shaping has expired under conditions taking into account the temperature condition during shaping and the balance between the ejection time $t_v$ and the waiting time $t_w$ of the nozzle tip for shaping in the same manner as in a case where the service life expiration determination of the nozzle tip for shaping is performed based on the formula (7). Step S413 is the same as Step S113 in FIG. 7.

According also to the three-dimensional shaping apparatus 5 of this embodiment described above, heat transfer to the stacked material from the heating block 90 is suppressed by the shield 68 so as to suppress deformation of the three-dimensional shaped article. Further, by executing replacement of the nozzle tip for shaping or the like prior to shaping of the three-dimensional shaped article based on the determined cumulative ejection amount of the material, the possibility that nozzle clogging is unexpectedly caused during shaping of the three-dimensional shaped article can be reduced. In particular, in this embodiment, the control unit 300 determines that the service life of the nozzle tip for shaping has expired when the formula (2) is satisfied. According to this, it can be simply determined whether or not the service life of the nozzle tip for shaping has expired under conditions taking into account the temperature condition during shaping and the balance between the ejection time $t_v$ and the waiting time $t_w$ of the nozzle tip for shaping without making the determination criteria different for each type of material. Therefore, the possibility that nozzle clogging is unexpectedly caused during shaping of the three-dimensional shaped article can be simply reduced.

F. Sixth Embodiment

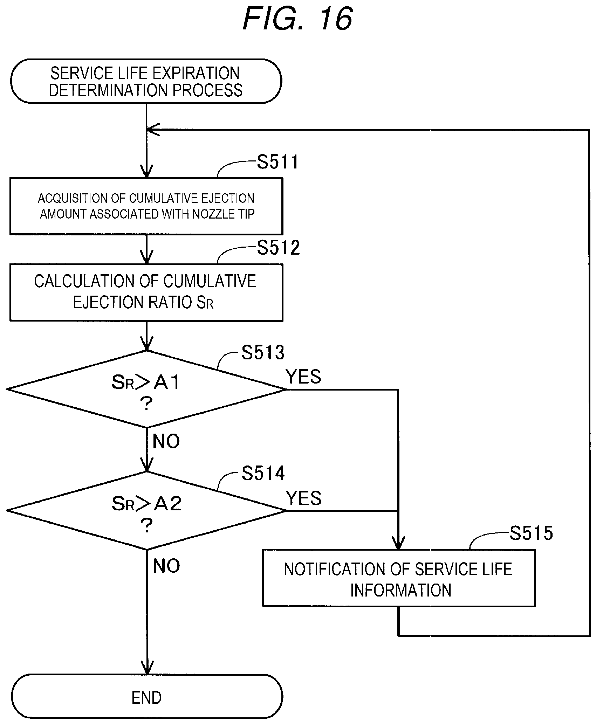

FIG. 16 is a process chart showing a service life expiration determination process in a sixth embodiment. In this embodiment, the control unit 300 makes multiple types of materials be ejected from one nozzle tip 60 unlike the first embodiment. Further, the condition for determining that the service life of the nozzle tip for shaping has expired is different from that of the first embodiment. Portions that are not particularly described in the configuration of the three-dimensional shaping apparatus 5 of this embodiment are the same as those of the first embodiment. Further, in this embodiment, the control unit 300 executes the same process as the three-dimensional shaping process shown in FIG. 6.

As described above, in this embodiment, the control unit 300 makes multiple types of materials be ejected from one nozzle tip 60. In this embodiment, the cumulative ejection amount of the nozzle tip for shaping is associated for each type of material ejected from the nozzle tip for shaping and recorded in the auxiliary memory device of the control unit 300. For example, when the first type of material ejected from the nozzle tip for shaping is ABS and the second type of material ejected from the nozzle tip for shaping is nylon 12, the control unit 300 is such that the cumulative value of the ejection amount of ABS ejected from the nozzle tip for shaping and the cumulative value of the ejection amount of nylon 12 ejected from the nozzle tip for shaping are individually associated with the nozzle information of the nozzle tip for shaping and recorded in the auxiliary memory device. When the control unit 300 notifies the ejection information through the notification portion 400 as shown in FIG. 9, for example, the control unit 300 may notify the cumulative ejection amount for each type of material ejected from the nozzle tip for shaping.

The control unit 300 executes the service life expiration determination process shown in FIG. 16 in Step S110 in FIG. 6. Step S511 is the same as Step S111 in FIG. 7. In this embodiment, in Step S512 in FIG. 16, the control unit 300 calculates a cumulative ejection ratio $S_R$ unlike the first embodiment. The cumulative ejection ratio $S_R$ is, for example, represented by the following formula (11) when the number of types of materials that have had the experience of being ejected from the nozzle tip for shaping is 2.

$$S_R = (S_1/S_{L1}) + (S_2/S_{L2}) \qquad (11)$$

$S_1$ and $S_2$ are the cumulative ejection amounts of the first type of material and the second type of material, respectively, each of which has had the experience of being ejected from the nozzle tip for shaping. Further, $S_L$, and $S_{L2}$ are the maximum ejection amounts of the first type of material and the second type of material, respectively. Also when three or more types of materials have had the experience of being ejected from the nozzle tip for shaping, the cumulative ejection ratio $S_R$ can be calculated by sequentially adding a term such as $S_3/S_{L3}$ to the above formula (11).

In Step S513, the control unit 300 determines whether or not the cumulative ejection ratio $S_R$ calculated in Step S512 exceeds a service life determination value A1 with respect to the first type of material. In Step S513, when it is determined that the cumulative ejection ratio $S_R$ does not exceed the service life determination value A1, in Step S514, the control unit 300 determines whether or not the cumulative ejection ratio $S_R$ exceeds a service life determination value A2 with respect to the second type of material. When it is determined that the cumulative ejection ratio $S_R$ does not exceed the service life determination value A2 in Step S514, the control unit 300 ends the service life expiration determination process.

When it is determined that the cumulative ejection ratio $S_R$ exceeds the service life determination value A1 in Step S513, or when it is determined that the cumulative ejection ratio $S_R$ exceeds the service life determination value A2 in Step S514, the control unit 300 determines that the service life of the nozzle tip for shaping has expired. In this case, the control unit 300 notifies the service life information of the nozzle tip for shaping in Step S515 in the same manner as in Step S113 in FIG. 7. When three or more types of materials have had the experience of being ejected from the nozzle tip for shaping, after it is determined that the cumulative ejection ratio $S_R$ does not exceed the service life determination value A2 in Step S514, the control unit 300 further determines whether or not the cumulative ejection ratio $S_R$ exceeds a service life determination value A3 with respect to the third type of material. In addition, the same applies to materials of the fourth type and subsequent types. That is, in this embodiment, the control unit 300 performs comparison of the cumulative ejection ratio $S_R$ with the service life determination values of all types of materials that have had the experience of being ejected from the nozzle tip for shaping, and determines that the service life of the nozzle tip for shaping has expired when the cumulative ejection ratio $S_R$ exceeds the service life determination value of any one type of material in the service life expiration determination process.

Even when the number of types of materials that have had the experience of being ejected from the nozzle tip for shaping is one, the control unit 300 can calculate the cumulative ejection ratio $S_R$ in Step S512. In this case, the cumulative ejection ratio $S_R$ becomes $S/S_{L1}$. Further, the control unit 300 determines whether or not the value of this $S/S_{L1}$ exceeds the service life determination value A1 in Step S513. That is, the service life expiration determination in this case ends up being the same as the service life expiration determination based on the formula (3).

According also to the three-dimensional shaping apparatus 5 of this embodiment described above, heat transfer to the stacked material from the heating block 90 is suppressed by the shield 68 so as to suppress deformation of the three-dimensional shaped article. Further, by executing replacement of the nozzle tip for shaping or the like prior to shaping of the three-dimensional shaped article based on the determined cumulative ejection amount of the material, the possibility that nozzle clogging is unexpectedly caused during shaping of the three-dimensional shaped article can be reduced. In particular, in this embodiment, the control unit 300 calculates the cumulative ejection ratio $S_R$ and performs the service life expiration determination based on the cumulative ejection ratio $S_R$. Therefore, even when multiple types of materials are ejected from the nozzle tip 60, it can be determined whether or not the service life of the nozzle tip 60 has expired, and the possibility that nozzle clogging is unexpectedly caused during shaping of the three-dimensional shaped article can be reduced.

In other embodiments, when multiple types of materials are ejected from one nozzle tip 60 in the three-dimensional shaping process in the same manner as in the above-mentioned sixth embodiment, the control unit 300 need not determine whether or not the service life of the nozzle tip for shaping has expired based on the cumulative ejection ratio. For example, the control unit 300 may determine whether or not the service life of the nozzle tip for shaping has expired by determining whether or not the formula (1), the formula (2), or the formula (10) is satisfied. In this case, the control unit 300, for example, can determine whether or not the service life of the nozzle tip for shaping has expired based on the formula (1), the formula (2), or the formula (10) by using the smallest value among the maximum ejection amounts of the materials that have had the experience of being ejected as the maximum ejection amount $S_L$, the smallest value of the chamber temperature as the chamber temperature $T_c$, and the largest value of the tip temperature as the tip temperature Tt in the formula (1), the formula (2), or the formula (10). Further, the control unit 300 can determine whether or not the service life of the nozzle tip for shaping has expired based on the formula (3), the formula (4), or the formula (7) by using the smallest value among the service life determination values of the materials that have had the experience of being ejected as the service life determination value A or the service life determination value B or the service life determination value C in addition to the above in the formula (3), the formula (4), or the formula (7).

G. Seventh Embodiment

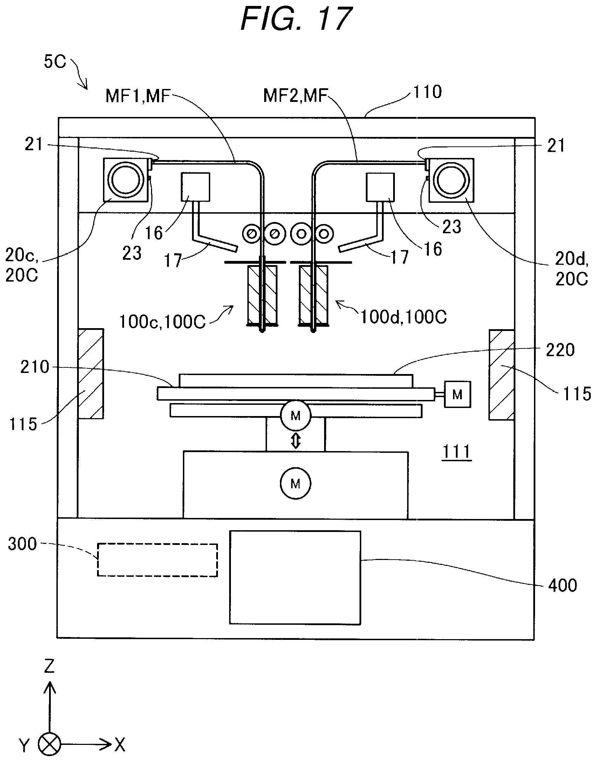

FIG. 17 is a view showing a schematic configuration of a three-dimensional shaping apparatus 5C according to a seventh embodiment. The three-dimensional shaping apparatus 5C of this embodiment is a three-dimensional shaping apparatus using the ME method in the same manner as in the first embodiment, but the configurations of the respective portions are different from those of the first embodiment. The description of the same configuration as that of the first embodiment in the configuration of the three-dimensional shaping apparatus 5C of this embodiment will be omitted.

The three-dimensional shaping apparatus 5C of this embodiment includes two ejection portions 100C, two material storage portions 20C, the chamber 110, the moving mechanism portion 210, the stage 220, the control unit 300, and the notification portion 400 in the same manner as that of the first embodiment. The three-dimensional shaping apparatus 5C specifically includes a first ejection portion 100c and a second ejection portion 100d as the ejection portions 100C, and includes a first material storage portion 20c and a second material storage portion 20d as the material storage portions 20C. Hereinafter, when the first ejection portion 100c and the second ejection portion 100d are described without particularly making a distinction between them, these portions are sometimes simply referred to as "ejection portion 100C". Similarly, when the first material storage portion 20c and the second material storage portion 20d are described without particularly making a distinction between them, these portions are sometimes simply referred to as "material storage portion 20C". Further, when a constituent element related to the first ejection portion 100c and a constituent element related to the second ejection portion 100d are described while making a distinction between them, for the constituent element related to the first ejection portion 100c, "c" is attached to the end of the reference numeral, and for the constituent element related to the second ejection portion 100d, "d" is attached to the end of the reference numeral.

The three-dimensional shaping apparatus 5C further includes two blowers 16. The blower 16 is constituted as an air blowing machine that blows air to the ejection portion 100C through a manifold 17.

In this embodiment, in the shaping space 111 in the chamber 110, a part of the manifold 17, the ejection portion 100C, the moving mechanism portion 210, and the stage 220 are stored.

The material storage portion 20C of this embodiment is constituted as a holder that stores a filamentous material MF. The material storage portion 20C includes an outlet portion 21 and an unwinding amount memory portion 23. The material storage portion 20C is configured to be able to unwind the material MF stored therein to the outside of the material storage portion 20C through the outlet portion 21. In this embodiment, in the first material storage portion 20c, a first material MF1 is stored, and in the second material storage portion 20d, a second material MF2 is stored.

The unwinding amount memory portion 23 is constituted by an IC chip as a memory medium and is coupled to the control unit 300 through an unillustrated wiring and an unillustrated coupling portion. In the unwinding amount memory portion 23, the type of material in the material storage portion 20C and the amount of the material MF unwound to the outside from the material storage portion 20C are recorded by the control unit 300. In this embodiment, the control unit 300 links the type of material MF to the ejection portion 100C based on the information of the type of material MF recorded in the unwinding amount memory portion 23.

In the unwinding amount memory portion 23, the amount of the material MF unwound from the material storage portion 20C is recorded, for example, as a volume calculated by multiplying the wire diameter of the material MF by the length of the unwound material MF. In this case, the length of the unwound material MF may be calculated, for example, based on the rotational speed of an unillustrated feeding roller provided in the material storage portion 20C or based on the feeding amount of the material MF by the below-mentioned material conveying mechanism 40C. In addition, in the unwinding amount memory portion 23, for example, the residual amount of the material MF may be recorded. The residual amount of the material MF is, for example, calculated by the control unit 300 based on the initial filling amount of the material MF stored in the material storage portion 20C and the amount of the material MF unwound from the material storage portion 20C.

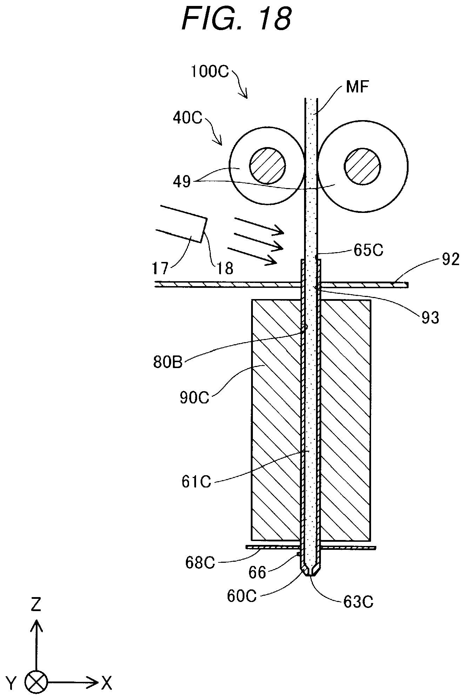

FIG. 18 is a view for illustrating a schematic configuration of the ejection portion 100C of this embodiment. The ejection portion 100C includes a heating block 90C that has a heater and is provided with a through hole 80C, a nozzle tip 60C that is detachably attached to the through hole 80C, and a material conveying mechanism 40C that conveys a material to a nozzle flow channel 61C of a nozzle tip for shaping being the nozzle tip 60C attached to the heating block 90C in the same manner as in the first embodiment. In addition, the ejection portion 100C further includes a heat shield 92 that is disposed between the material conveying mechanism 40C and the heating block 90C in the Z direction and suppresses heat transfer to the material conveying mechanism 40C from the heating block 90C. The material conveying mechanism 40C of this embodiment is constituted by two wheels 49 without including the screw case 31 or the screw 41 unlike the first embodiment. The heating block 90C does not include the barrel 50 or the case portion 91 unlike the first embodiment.

The nozzle tip 60C of this embodiment is attached to the heating block 90C by being inserted into the through hole 80C and a shield opening 93 provided in the heat shield 92 from the -Z direction unlike the first embodiment. That is, in this embodiment, the dimension along the Z direction of the nozzle tip 60C and the dimension along the Z direction of the nozzle flow channel 61C are longer than the dimension along the Z direction of the through hole 80C. Therefore, in this embodiment, a flow inlet 65C provided at the rear end of the nozzle tip 60C is located in the +Z direction of the heating block 90C, more specifically, in the +Z direction of the heat shield 92.

The nozzle tip 60C includes a shield 68C in the same manner as in the first embodiment. The nozzle tip 60C includes the memory 66 in the same manner as in the first embodiment. The memory 66 functions as a nozzle information memory portion and stores nozzle information in the same manner as in the first embodiment. The memory 66 is located between the nozzle opening 63C and the shield 68C in the Z direction in the same manner as in the first embodiment.

The two wheels 49 constituting the material conveying mechanism 40C draw out the material MF in the material storage portion 20C by their rotation to guide the material between the two wheels 49, and convey the material to the nozzle flow channel 61C of the nozzle tip 60C attached to the through hole 80C of the heating block 90C. The heating block 90C plasticizes the material MF conveyed into the nozzle flow channel 61C of the nozzle tip 60C by heat of an unillustrated heater incorporated in the heating block 90C.

The material MF of this embodiment is cooled by air sent from the blower 16 through the manifold 17 in the vicinity of the flow inlet 65C of the nozzle tip 60C. By doing this, plasticization of the material MF in the vicinity of the flow inlet 65C is suppressed, and the material MF is efficiently conveyed into the flow inlet 65C. An outlet end 18 of the manifold 17 is located in the +Z direction of the heat shield 92. Due to this, air sent out from the manifold 17 is easily guided to the vicinity of the flow inlet 65C by the heat shield 92, and therefore, the material MF in the vicinity of the flow inlet 65C is efficiently cooled.

Also in this embodiment, the control unit 300 can shape a three-dimensional shaped article by, for example, executing the three-dimensional shaping process shown in FIG. 6 in the same manner as in the first embodiment. Further, the control unit 300 may, for example, perform the service life expiration determination of the nozzle tip for shaping based on the formula (10) in the same manner as in the third embodiment. Further, the control unit 300 may perform the service life expiration determination of the nozzle tip for shaping based on the formula (1), the formula (2), the formula (4), or the formula (7) when a three-dimensional shaped article is shaped by controlling the heater 58 of the heating block 90 so as to adjust the temperature of the nozzle tip for shaping to the tip temperature $T_t$ [°C] and also controlling the chamber heating portion 115 so as to adjust the temperature of the shaping space 111 to the chamber temperature $T_c$ [°C] in the same manner as in the fourth embodiment or the fifth embodiment.

According also to the three-dimensional shaping apparatus 5C of this embodiment described above, heat transfer to the stacked material from the heating block 90C is suppressed by the shield 68C so as to suppress deformation of the three-dimensional shaped article. Further, by executing replacement of the nozzle tip for shaping or the like prior to shaping of the three-dimensional shaped article based on the determined cumulative ejection amount of the material, the possibility that nozzle clogging is unexpectedly caused during shaping of the three-dimensional shaped article can be reduced.

In other embodiments, the control unit 300 may, for example, determine the cumulative ejection amount of the nozzle tip for shaping based on the conveyance amount of the material MF conveyed by the material conveying mechanism 40C. The conveyance amount is calculated, for example, based on the rotational speed of the wheel 49 measured by a tachometer. In this case, for example, in Step S132 in FIG. 10, the control unit 300 acquires the conveyance amount of the material MF conveyed by the material conveying mechanism 40C in Step S120 or Step S160. The conveyance amount of the material MF corresponds to the ejection amount of the material ejected from the nozzle tip for shaping in Step S120 or Step S160 in FIG. 6. Therefore, the control unit 300 can calculate and determine a new cumulative ejection amount of the nozzle tip for shaping by adding the conveyance amount to the cumulative ejection amount of the nozzle tip for shaping read in Step S131. According to such a configuration, the cumulative ejection amount can be determined based on the actual measurement value regarding the ejection amount of the material ejected from the nozzle tip for shaping in the same manner as in the second embodiment, and therefore, for example, the accuracy of the service life expiration determination of the nozzle tip 60C can be enhanced.

In other embodiments, the control unit 300 may, for example, determine the cumulative ejection amount of the nozzle tip for shaping based on a residual amount that is the amount of the material MF stored in the material storage portion 20C. In this case, for example, in Step S132 in FIG. 10, the control unit 300 acquires the residual amount of the material MF before and after Step S120 or Step S160 from the unwinding amount memory portion 23. Then, the control unit 300 calculates a difference in the residual amount of the material MF between before and after Step S120 or Step S160. The difference in the residual amount of the material MF corresponds to the ejection amount of the material ejected from the nozzle tip for shaping in Step S120 or Step S160 in FIG. 6. Therefore, the control unit 300 can calculate and determine a new cumulative ejection amount of the nozzle tip for shaping by adding the conveyance amount to the cumulative ejection amount of the nozzle tip for shaping read in Step S131. According to such a configuration, the cumulative ejection amount can be determined based on the actual measurement value regarding the ejection amount of the material ejected from the nozzle tip for shaping in the same manner as in the second embodiment, and therefore, for example, the accuracy of the service life expiration determination of the nozzle tip 60C can be enhanced. The control unit 300 may determine the cumulative ejection amount of the nozzle tip for shaping based on the unwinding amount of the material from the material storage portion 20C in the same manner.

H. Eighth Embodiment

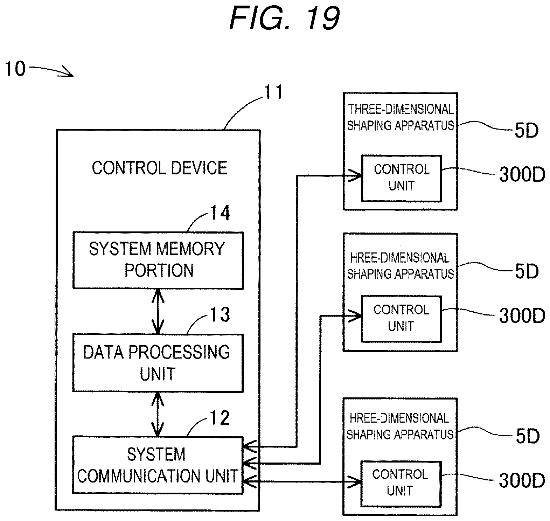

FIG. 19 is a schematic block diagram showing a configuration of a three-dimensional shaping system 10 as an eighth embodiment. The three-dimensional shaping system 10 includes a three-dimensional shaping apparatus 5D and a control device 11. The three-dimensional shaping system 10 of this embodiment includes three three-dimensional shaping apparatuses 5D. In other embodiments, the number of three-dimensional shaping apparatuses 5D in the three-dimensional shaping system 10 may be 1 or 2 or may be 4 or more. Further, portions that are not particularly described in the three-dimensional shaping apparatus 5D of this embodiment are the same as those of the first embodiment. In other embodiments, the three-dimensional shaping apparatus 5D may be, for example, configured to plasticize a filamentous material MF and eject the plasticized material in the same manner as in the seventh embodiment.

The control device 11 is constituted by a computer including one or more processors, a main memory device, and an input/output interface for performing signal input/output to/from the outside. The control device 11 exhibits various functions by executing a program or a command read in the main memory device by the processor. The control device 11 may be constituted by a combination of multiple circuits instead of a computer.

In the three-dimensional shaping apparatus 5D of this embodiment, a control unit 300D does not record the nozzle information of the nozzle tip for shaping and the cumulative ejection amount in association with each other unlike the first embodiment. Further, the three-dimensional shaping apparatus 5D includes a communication unit configured to be able to communicate with the control device 11 by wire or wirelessly. The communication unit transmits the nozzle information of the nozzle tip for shaping and the cumulative ejection amount to the control device 11. In this embodiment, the control unit 300D functions as the communication unit.

The control device 11 includes a system communication unit 12, a data processing unit 13, and a system memory portion 14. The system communication unit 12 communicates with the control unit 300D that functions as the communication unit and receives the nozzle information and the cumulative ejection amount transmitted from the control unit 300D. The data processing unit 13 associates the nozzle information with the cumulative ejection amount and records them in the system memory portion 14.

Further, the control unit 300D of this embodiment can acquire the cumulative ejection amount associated with the nozzle information recorded in the system memory portion 14 by communicating with the control device 11. In this case, the control unit 300D, for example, transmits the nozzle information of the nozzle tip 60 whose cumulative ejection amount is desired to be acquired to the control device 11. The control device 11 acquires the cumulative ejection amount associated with the nozzle information recorded in the system memory portion 14 by the data processing unit 13 based on the nozzle information received by the system communication unit 12, and transmits the cumulative ejection amount to the control unit 300D by the system communication unit 12.

In this embodiment, the control unit 300D executes the same process as the three-dimensional shaping process shown in FIG. 6. Therefore, the control unit 300D executes the same process as the service life expiration determination process shown in FIG. 7 in Step S110 in FIG. 6. In Step S130 and Step S170 in FIG. 6, the same process as the cumulative ejection amount determination process shown in FIG. 10 is executed.

In Step S111 in FIG. 7, the control unit 300D first acquires the nozzle information from the memory 66 of the nozzle tip for shaping. Further, the control unit 300D transmits the acquired nozzle information to the control device 11 and acquires the cumulative ejection amount recorded in the system memory portion 14 of the control device 11 associated with the nozzle information that matches with the transmitted nozzle information. Step S112 and Step S113 are the same as in the first embodiment.

In Step S131 in FIG. 10, the control unit 300D acquires the nozzle information in the same manner as in Step Sill in FIG. 7, and acquires the cumulative ejection amount recorded in association with the nozzle information from the control device 11. In Step S133, the control unit 300D transmits the nozzle information and a new cumulative ejection amount to the control device 11. The control device 11 records the transmitted nozzle information and new cumulative ejection amount in association with each other in the system memory portion 14. In other embodiments, for example, the control device 11 may update the cumulative ejection amount based on the nozzle information and the ejection amount transmitted from the control unit 300D. In this case, the data processing unit 13 of the control device 11, for example, reads the cumulative ejection amount recorded in the system memory portion 14 based on the nozzle information received from the control unit 300D by the system communication unit 12, and calculates a new cumulative ejection amount by adding the ejection amount received from the control unit 300D to the read cumulative ejection amount, and then, records the new cumulative ejection amount in the system memory portion 14.

According also to the three-dimensional shaping system 10 of this embodiment described above, heat transfer to the stacked material from the heating block 90 is suppressed by the shield 68 so as to suppress deformation of the three-dimensional shaped article. Further, by executing replacement of the nozzle tip for shaping or the like prior to shaping of the three-dimensional shaped article based on the determined cumulative ejection amount of the material, the possibility that nozzle clogging is unexpectedly caused during shaping of the three-dimensional shaped article can be reduced. In particular, in this embodiment, even when the three-dimensional shaping system 10 records the nozzle tip for shaping and the cumulative ejection amount in association with each other without recording the nozzle tip for shaping and the cumulative ejection amount in association with each other by the three-dimensional shaping apparatus 5D, the possibility that nozzle clogging is unexpectedly caused during shaping of the three-dimensional shaped article can be reduced.

## Claims

1. A three-dimensional shaping apparatus (5), comprising:

   a heating block (90) that has a heater (58) and is provided with a through hole (80);
   a nozzle tip (60) that is provided with a nozzle flow channel (61) having a nozzle opening (63) and that is detachably attached to the through hole of the heating block;
   a material conveying mechanism (40C) that is configured to convey a material to the nozzle flow channel of the nozzle tip attached to the heating block, the nozzle tip being configured to eject the material and the material being plasticized by heat produced by the heating block;
   a stage (220) at which the material plasticized by the heat of the heating block is ejected from the nozzle opening of the nozzle tip and stacked; and
   a control unit (300) that is configured to change a relative position of the nozzle tip and the stage and to eject the material to the stage from the nozzle tip, thereby shaping a three-dimensional shaped article, wherein
   the nozzle tip has a shield (68C) configured to suppress transfer of heat from the heating block to the material stacked at the stage, and
   the control unit is configured to determine a cumulative ejection amount of the material ejected from the nozzle tip.

2. The three-dimensional shaping apparatus (5) according to claim 1, further comprising a material storage portion (20) that is configured to store the material, wherein

   the material conveying mechanism (40) is configured to convey the material stored in the material storage portion to the nozzle flow channel of the nozzle tip, and
   the control unit (300) is configured to determine the cumulative ejection amount based on an amount of the material stored in the material storage portion.

3. The three-dimensional shaping apparatus (5) according to claim 1, wherein
   the control unit (300) is configured to determine the cumulative ejection amount based on a conveyance amount of the material conveyed by the material conveying mechanism (40).

4. The three-dimensional shaping apparatus (5) according to claim 1, wherein
   the control unit (300) is configured to determine the cumulative ejection amount based on an amount of the material ejected to the stage from the nozzle tip (60).

5. The three-dimensional shaping apparatus (5) according to claim 1, wherein

   the control unit (300) is configured to shape the three-dimensional shaped article according to shaping data including ejection amount information regarding the amount of the material to be ejected from the nozzle tip (60), and
   the control unit is configured to determine the cumulative ejection amount based on the shaping data.

6. The three-dimensional shaping apparatus (5) according to claim 1, further comprising:

a chamber (110) having a shaping space (111);
a chamber heating portion (115) that is configured to heat the shaping space; and
a notification portion (400), wherein
the heating block (90), the nozzle tip (60), and the stage (220) are disposed in the shaping space,
the control unit (300) is configured to control the heater (58) so as to adjust a temperature of the nozzle tip to a tip temperature Tt [°C] and also controls the chamber heating portion so as to adjust a temperature of the shaping space to a chamber temperature $T_c$ [°C], and shapes the three-dimensional shaped article, and
the control unit is configured to control the notification portion so as to notify information regarding a service life of the nozzle tip prior to the shaping of the three-dimensional shaped article when the following formula (1) is satisfied:

$$(S/S_L) \times (T_t/T_c) > 0.92 \qquad (1)$$

wherein S represents the cumulative ejection amount, and $S_L$ represents a maximum amount of the material ejectable by the nozzle tip.

7. The three-dimensional shaping apparatus (5) according to claim 1, further comprising:

a chamber (110) having a shaping space (111);
a chamber heating portion (115) that is configured to heat the shaping space; and
a notification portion (400), wherein
the heating block (90), the nozzle tip (60), and the stage (220) are disposed in the shaping space,
the control unit (300) is configured to control the heater so as to adjust a temperature of the nozzle tip to a tip temperature Tt [°C] and is also configured to control the chamber heating portion so as to adjust a temperature of the shaping space to a chamber temperature $T_c$ [°C], so as to shape the three-dimensional shaped article, and
the control unit is configured to control the notification portion so as to notify information regarding a service life of the nozzle tip prior to the shaping of the three-dimensional shaped article when the following formula (2) is satisfied:

$$(S/S_L) \times (T_t/T_c) \times (t_v/t_w) > 0.39 \qquad (2)$$

wherein S represents the cumulative ejection amount, $S_L$ represents a maximum amount of the material ejectable by the nozzle tip, $t_v$ represents an ejection time that is a time in which the nozzle tip ejects the material in an activation state of the three-dimensional shaping apparatus, and $t_w$ represents a time in which the nozzle tip waits without ejecting the material in the activation state.

8. The three-dimensional shaping apparatus (5) according to claim 1, wherein

the nozzle tip (60) has a nozzle information memory portion (66) storing nozzle information of the nozzle tip, and
the control unit (300) is configured to record the nozzle information and the cumulative ejection amount in association with each other.

9. The three-dimensional shaping apparatus (5) according to claim 8, wherein
the control unit (300) is configured to

acquire the cumulative ejection amount associated with the nozzle information,
calculate and determine a new cumulative ejection amount by adding the ejection amount of the material ejected by the nozzle tip (60) to the acquired cumulative ejection amount, and
record the new cumulative ejection amount and the nozzle information in association with each other.

10. The three-dimensional shaping apparatus (5) according to claim 8, wherein
the nozzle information memory portion (66) is located between the nozzle opening (63) and the shield (68C) in a direction along the nozzle flow channel (61).

**Patentansprüche**

1.  Vorrichtung (5) zur dreidimensionalen Formung, umfassend:

    einen Heizblock (90), der eine Heizeinrichtung (58) aufweist und mit einem Durchgangsloch (80) versehen ist;
    eine Düsenspitze (60), die mit einem Düsenströmungskanal (61) mit einer Düsenöffnung (63) versehen ist und die lösbar an dem Durchgangsloch des Heizblocks befestigt ist;
    einen Materialbeförderungsmechanismus (40C), der ausgelegt ist, ein Material zu dem Düsenströmungskanal der Düsenspitze, die an dem Heizblock befestigt ist, zu befördern, wobei die Düsenspitze ausgelegt ist, das Material auszustoßen, und das Material durch Wärme, die von dem Heizblock erzeugt wird, plastifiziert wird;
    eine Plattform (220), an der das Material, das durch die Wärme des Heizblocks plastifiziert ist, von der Düsenöffnung der Düsenspitze ausgestoßen und gestapelt wird; und
    eine Steuereinheit (300), die ausgelegt ist, eine relative Position der Düsenspitze und der Plattform zu ändern und das Material von der Düsenspitze auf die Plattform auszustoßen, um dadurch einen dreidimensionalen Formartikel zu formen, wobei
    die Düsenspitze eine Abschirmung (68C) aufweist, die ausgelegt ist, Übertragung von Wärme von dem Heizblock auf das Material, das an der Plattform gestapelt ist, zu unterdrücken, und
    die Steuereinheit ausgelegt ist, eine kumulative Ausstoßmenge des von der Düsenspitze ausgestoßenen Materials zu bestimmen.

2.  Vorrichtung (5) zur dreidimensionalen Formung nach Anspruch 1, weiter umfassend einen Materiallagerungsabschnitt (20), der ausgelegt ist, das Material zu lagern, wobei

    der Materialbeförderungsmechanismus (40) ausgelegt ist, das in dem Materiallagerungsabschnitt gelagerte Material zu dem Düsenströmungskanal der Düsenspitze zu befördern, und
    die Steuereinheit (300) ausgelegt ist, die kumulative Ausstoßmenge basierend auf einer Menge des in dem Materiallagerungsabschnitt gelagerten Materials zu bestimmen.

3.  Vorrichtung (5) zur dreidimensionalen Formung nach Anspruch 1, wobei
    die Steuereinheit (300) ausgelegt ist, die kumulative Ausstoßmenge basierend auf einem Beförderungsausmaß des Materials, das von dem Materialbeförderungsmechanismus (40) befördert wird, zu bestimmen.

4.  Vorrichtung (5) zur dreidimensionalen Formung nach Anspruch 1, wobei
    die Steuereinheit (300) ausgelegt ist, die kumulative Ausstoßmenge basierend auf einer Menge des Materials, das von der Düsenspitze (60) auf die Plattform ausgestoßen wird, zu bestimmen.

5.  Vorrichtung (5) zur dreidimensionalen Formung nach Anspruch 1, wobei

    die Steuereinheit (300) ausgelegt ist, den dreidimensionalen Formartikel gemäß Formungsdaten zu formen, die Ausstoßmengeninformationen über die Menge des Materials enthalten, das von der Düsenspitze (60) ausgestoßen wird, und
    die Steuereinheit ausgelegt ist, die kumulative Ausstoßmenge basierend auf den Formungsdaten zu bestimmen.

6.  Vorrichtung (5) zur dreidimensionalen Formung nach Anspruch 1, weiter umfassend:

    eine Kammer (110) mit einem Formungsraum (111);
    einen Kammerheizabschnitt (115), der ausgelegt ist, den Formungsraum zu erhitzen; und
    einen Benachrichtigungsabschnitt (400), wobei
    der Heizblock (90), die Düsenspitze (60) und die Plattform (220) in dem Formungsraum angeordnet sind,
    die Steuereinheit (300) ausgelegt ist, die Heizeinrichtung (58) zu steuern, um eine Temperatur der Düsenspitze auf eine Spitzentemperatur Tt [°C] einzustellen, und auch den Kammerheizabschnitt steuert, um eine Temperatur des Formungsraums auf eine Kammertemperatur $T_c$ [°C] einzustellen, und den dreidimensionalen Formartikel formt; und
    die Steuereinheit ausgelegt ist, den Benachrichtigungsabschnitt zu steuern, um Informationen über eine Nutzungsdauer der Düsenspitze vor Formen des dreidimensionalen Formartikels zu melden, wenn die folgende Formel (1) erfüllt ist:

$$(S/S_L) \times (T_t/T_c) > 0,92 \qquad (1)$$

wobei S die kumulative Ausstoßmenge darstellt und $S_L$ eine maximale Menge des Materials darstellt, die von der Düsenspitze ausgestoßen werden kann.

**7.** Vorrichtung (5) zur dreidimensionalen Formung nach Anspruch 1, weiter umfassend:

eine Kammer (110) mit einem Formungsraum (111);
einen Kammerheizabschnitt (115), der ausgelegt ist, den Formungsraum zu erhitzen; und
einen Benachrichtigungsabschnitt (400), wobei
der Heizblock (90), die Düsenspitze (60) und die Plattform (220) in dem Formungsraum angeordnet sind,
die Steuereinheit (300) ausgelegt ist, die Heizeinrichtung zu steuern, um eine Temperatur der Düsenspitze auf eine Spitzentemperatur Tt [°C] einzustellen, und auch ausgelegt ist, den Kammerheizabschnitt zu steuern, um eine Temperatur des Formungsraums auf eine Kammertemperatur $T_c$ [°C] einzustellen, um so den dreidimensionalen Formartikel zu formen, und
die Steuereinheit ausgelegt ist, den Benachrichtigungsabschnitt zu steuern, um Informationen über eine Nutzungsdauer der Düsenspitze vor Formen des dreidimensionalen Formartikels zu melden, wenn die folgende Formel (2) erfüllt ist:

$$(S/S_L) \times (T_t/T_c) \times (t_v/t_w) > 0,39 \qquad (2)$$

wobei S die kumulative Ausstoßmenge darstellt, $S_L$ eine maximale Menge des Materials darstellt, die von der Düsenspitze ausgestoßen werden kann, $t_v$ eine Ausstoßzeit darstellt, die eine Zeit ist, in der die Düsenspitze das Material in einem Aktivierungszustand der Vorrichtung zur dreidimensionalen Formung ausstößt, und $t_w$ eine Zeit darstellt, in der die Düsenspitze wartet, ohne das Material im Aktivierungszustand auszustoßen.

**8.** Vorrichtung (5) zur dreidimensionalen Formung nach Anspruch 1, wobei

die Düsenspitze (60) einen Düseninformationsspeicherabschnitt (66) aufweist, der Düseninformationen der Düsenspitze speichert, und
die Steuereinheit (300) ausgelegt ist, die Düseninformationen und die kumulative Ausstoßmenge in Verknüpfung miteinander aufzuzeichnen.

**9.** Vorrichtung (5) zur dreidimensionalen Formung nach Anspruch 8, wobei

die Steuereinheit (300) ausgelegt ist zum
Erlangen der kumulativen Ausstoßmenge in Verknüpfung mit den Düseninformationen,
Berechnen und Bestimmen einer neuen kumulativen Ausstoßmenge durch Addieren der Ausstoßmenge des Materials, das von der Düsenspitze (60) ausgestoßen wird, zu der erlangten kumulativen Ausstoßmenge und
Aufzeichnen der neuen kumulativen Ausstoßmenge und der Düseninformationen in Verknüpfung miteinander.

**10.** Vorrichtung (5) zur dreidimensionalen Formung nach Anspruch 8, wobei
der Düseninformationsspeicherabschnitt (66) zwischen der Düsenöffnung (63) und der Abschirmung (68C) in einer Richtung entlang des Düsenströmungskanals (61) liegt.

**Revendications**

**1.** Appareil de mise en forme tridimensionnelle (5), comprenant :

un bloc chauffant (90) comportant un chauffage (58) et doté d'un trou traversant (80) ;
une pointe de buse (60) dotée d'un canal d'écoulement de buse (61) comportant un orifice de buse (63) et fixée de façon détachable au trou traversant du bloc chauffant ;
un mécanisme de transport de matériau (40C) configuré pour transporter un matériau vers le canal d'écoulement de buse de la pointe de buse fixée au bloc chauffant, la pointe de buse étant configurée pour éjecter le matériau et le matériau étant plastifié par la chaleur produite par le bloc chauffant ;

un étage (220) au niveau duquel le matériau plastifié par la chaleur du bloc chauffant est éjecté à partir de l'orifice de buse de la pointe de buse et empilé ; et
une unité de commande (300) configurée pour modifier une position relative de la pointe de buse et de l'étage pour éjecter le matériau vers l'étage depuis la pointe de buse, formant ainsi un article de forme tridimensionnelle, dans lequel
la pointe de buse comporte un cache (68C) configuré pour supprimer le transfert de chaleur du bloc chauffant vers le matériau empilé au niveau de l'étage, et
l'unité de commande est configurée pour déterminer une quantité d'éjection cumulative du matériau éjecté depuis la pointe de buse.

2. Appareil de mise en forme tridimensionnelle (5) selon la revendication 1, comprenant en outre une partie de stockage de matériau (20) configurée pour stocker le matériau, dans lequel

le mécanisme de transport de matériau (40) est configuré pour transporter le matériau stocké dans la partie de stockage de matériau vers le canal d'écoulement de buse de la pointe de buse, et
l'unité de commande (300) est configurée pour déterminer la quantité d'éjection cumulative sur la base d'une quantité du matériau stocké dans la partie de stockage de matériau.

3. Appareil de mise en forme tridimensionnelle (5) selon la revendication 1, dans lequel
l'unité de commande (300) est configurée pour déterminer la quantité d'éjection cumulative sur la base d'une quantité de transport du matériau transporté par le mécanisme de transport de matériau (40).

4. Appareil de mise en forme tridimensionnelle (5) selon la revendication 1, dans lequel
l'unité de commande (300) est configurée pour déterminer la quantité d'éjection cumulative sur la base d'une quantité de matériau éjectée vers l'étage depuis la pointe de buse (60).

5. Appareil de mise en forme tridimensionnelle (5) selon la revendication 1, dans lequel

l'unité de commande (300) est configurée pour former l'article de forme tridimensionnelle conformément à des données de mise en forme incluant des informations de quantité d'éjection relatives à la quantité du matériau à éjecter à partir de la pointe de buse (60), et
l'unité de commande est configurée pour déterminer la quantité d'éjection cumulative sur la base des données de mise en forme.

6. Appareil de mise en forme tridimensionnelle (5) selon la revendication 1, comprenant en outre :

une chambre (110) comportant un espace de mise en forme (111) ;
une partie de chauffage de chambre (115) configurée pour chauffer l'espace de mise en forme ; et
une partie de notification (400), dans lequel
le bloc chauffant (90), la pointe de buse (60) et l'étage (220) sont disposés dans l'espace de mise en forme,
l'unité de commande (300) est configurée pour commander le chauffage (58) de manière à régler une température de la pointe de buse à une température de pointe $T_t$ [°C] et commande également la partie de chauffage de chambre de manière à régler une température de l'espace de mise en forme à une température de chambre $T_c$ [°C], et forme d'article de forme tridimensionnelle, et
l'unité de commande est configurée pour commander la partie de notification de manière à notifier des informations relatives à une durée de vie de la pointe de buse avant la mise en forme de l'article de forme tridimensionnelle lorsque la formule (1) suivante est satisfaite :

$$(S/S_L) \ \times \ (T_t/T_c) \ > \ 0,92 \qquad\qquad (1)$$

où S représente la quantité d'éjection cumulative, et $S_L$ représente une quantité maximale du matériau éjectable par la pointe de buse.

7. Appareil de mise en forme tridimensionnelle (5) selon la revendication 1, comprenant en outre :

une chambre (110) comportant un espace de mise en forme (111) ;
une partie de chauffage de chambre (115) configurée pour chauffer l'espace de mise en forme ; et

une partie de notification (400), dans lequel

le bloc chauffant (90), la pointe de buse (60) et l'étage (220) sont disposés dans l'espace de mise en forme, l'unité de commande (300) est configurée pour commander le chauffage de manière à régler une température de la pointe de buse à une température de pointe $T_t$ [°C] et est également configurée pour commander la partie de chauffage de chambre de manière à régler une température de l'espace de mise en forme à une température de chambre $T_c$ [°C], de manière à former l'article de forme tridimensionnelle, et

l'unité de commande est configurée pour commander la partie de notification de manière à notifier des informations relatives à une durée de vie de la pointe de buse avant la mise en forme de l'article de forme tridimensionnelle lorsque la formule (2) suivante est satisfaite :

$$(S/S_L) \ \times \ (T_t/T_c) \ \times \ (t_v/t_w) \ > \ 0,39 \qquad (2)$$

où S représente la quantité d'éjection cumulative, $S_L$ représente une quantité maximale du matériau éjectable par la pointe de buse, $t_v$ représente un temps d'éjection consistant en un temps pendant lequel la pointe de buse éjecte le matériau dans un état d'activation de l'appareil de mise en forme tridimensionnelle, et $t_w$ représente une temps pendant lequel la pointe de buse est en attente sans éjecter le matériau dans l'état d'activation.

8. Appareil de mise en forme tridimensionnelle (5) selon la revendication 1, dans lequel

la pointe de buse (60) comporte une partie de mémoire d'informations de buse (66) stockant des informations de buse de la pointe de buse, et

l'unité de commande (300) est configurée pour enregistrer les informations de buse et la quantité d'éjection cumulative en association les unes avec les autres.

9. Appareil de mise en forme tridimensionnelle (5) selon la revendication 8, dans lequel l'unité de commande (300) est configurée pour

obtenir la quantité d'éjection cumulative associée aux informations de buse,

calculer et déterminer une nouvelle quantité d'éjection cumulative par ajout de la quantité d'éjection du matériau éjecté par la pointe de buse (60) pour obtenir la quantité d'éjection cumulative, et

enregistrer la nouvelle quantité d'éjection cumulative et les informations de buse en association les unes avec les autres.

10. Appareil de mise en forme tridimensionnelle (5) selon la revendication 8, dans lequel la partie de mémoire d'informations de buse (66) se trouve entre l'orifice de buse (63) et le cache (68C) dans une direction le long du canal d'écoulement de buse (61).

## FIG. 1

# FIG. 2

# FIG. 3

# FIG. 4

# FIG. 5

# FIG. 6

```
        ┌─────────────────────────────┐
        │   THREE-DIMENSIONAL         │
        │   SHAPING PROCESS           │
        └─────────────────────────────┘
                     │
                     ▼                    ╭─S100
        ┌─────────────────────────────┐
        │  ACQUISITION OF SHAPING DATA │
        └─────────────────────────────┘
                     │
                     ▼                    ╭─S110
        ║─────────────────────────────║
        ║ SERVICE LIFE EXPIRATION DETERMINATION ║
        ║─────────────────────────────║
                     │
                     ▼                    ╭─S115
        ┌─────────────────────────────┐
        │ START OF DISPLAY OF EJECTION INFORMATION │
        └─────────────────────────────┘
                     │
          ┌──────────┤
          │          ▼                   ╭─S120
          │ ┌─────────────────────────────┐
          │ │  SHAPING FOR ONE SHAPING PATH │
          │ └─────────────────────────────┘
          │          │
          │          ▼                   ╭─S130
          │ ║─────────────────────────────║
          │ ║  DETERMINATION OF CUMULATIVE  ║
          │ ║      EJECTION AMOUNT          ║
          │ ║─────────────────────────────║
          │          │
          │          ▼                   ╭─S140
          │ ┌─────────────────────────────┐
          │ │    UPDATE OF DISPLAY          │
          │ │   OF EJECTION INFORMATION     │
          │ └─────────────────────────────┘
          │          │
          │          ▼                   ╭─S150        YES
          │      ╱─────────────────╲─────────────┐
          │     ╱  IS PURGING PERFORMED? ╲        │
          │      ╲─────────────────╱              ▼            ╭─S160
          │          │ NO              ┌─────────────────────────────┐
          │          │                 │          PURGING            │
          │          │                 └─────────────────────────────┘
          │          │                            │
          │          │                            ▼          ╭─S170
          │          │                 ║─────────────────────────────║
          │          │                 ║ DETERMINATION OF CUMULATIVE  ║
          │          │                 ║      EJECTION AMOUNT         ║
          │          │                 ║─────────────────────────────║
          │          │                            │
          │          │                            ▼          ╭─S180
          │          │                 ┌─────────────────────────────┐
          │          │                 │    UPDATE OF DISPLAY         │
          │          │                 │   OF EJECTION INFORMATION    │
          │          │                 └─────────────────────────────┘
          │          │                            │
          │          ◄────────────────────────────┘
          │          ▼                   ╭─S190
      NO  │      ╱─────────────────╲
     ─────┴─────╱    COMPLETED?      ╲
              ╲─────────────────╱
                     │ YES
                     ▼
        ┌─────────────────────────────┐
        │           END               │
        └─────────────────────────────┘
```

## FIG. 7

```
       ┌─────────────────────────────┐
       │    SERVICE LIFE EXPIRATION   │
       │    DETERMINATION PROCESS     │
       └─────────────────────────────┘
                     │
                     │        ┌── S111
                     ▼
       ┌─────────────────────────────────────────┐
       │ ACQUISITION OF CUMULATIVE EJECTION AMOUNT │
       │      ASSOCIATED WITH NOZZLE TIP           │
       └─────────────────────────────────────────┘
                     │
                     │          ┌── S112
                     ▼
              ╱─────────────╲         YES
            ╱   S / S_L > A   ╲──────────────┐
            ╲       ?         ╱               │
              ╲─────────────╱                 ▼      ┌── S113
                     │ NO          ┌─────────────────────────────┐
                     │             │   NOTIFICATION OF SERVICE LIFE │
                     │             │        INFORMATION            │
                     ▼             └─────────────────────────────┘
              ┌──────────────┐
              │     END      │
              └──────────────┘
```

## FIG. 8

| TYPE OF MATERIAL | REFERENCE TIP TEMPERATURE $T_{ts}$ (°C) | REFERENCE CHAMBER TEMPERATURE $T_{ts}$ (°C) | SERVICE LIFE DETERMINATION VALUE A |
|---|---|---|---|
| ABS | 330 | 85 | 0.80 |
| NYLON 12 | 355 | 120 | 0.72 |
| PC | 365 | 145 | 0.80 |
| PPSF | 415 | 225 | 0.50 |

## FIG. 9

400

FIRST NOZZLE TIP

CUMULATIVE
EJECTION AMOUNT
*****

MAXIMUM
EJECTION AMOUNT
*****

SECOND NOZZLE TIP

CUMULATIVE
EJECTION AMOUNT
*****

MAXIMUM
EJECTION AMOUNT
*****

# FIG. 10

```
┌─────────────────────────────────┐
│ CUMULATIVE EJECTION AMOUNT      │
│ DETERMINATION PROCESS           │
└─────────────────────────────────┘
                │  ┌─S131
                ▼
┌─────────────────────────────────┐
│ ACQUISITION OF CUMULATIVE       │
│ EJECTION AMOUNT ASSOCIATED       │
│ WITH NOZZLE TIP                  │
└─────────────────────────────────┘
                │  ┌─S132
                ▼
┌─────────────────────────────────┐
│ ADDITION OF IMMEDIATELY          │
│ PRECEDING EJECTION AMOUNT        │
│ TO CUMULATIVE EJECTION AMOUNT    │
└─────────────────────────────────┘
                │  ┌─S133
                ▼
┌─────────────────────────────────┐
│ ASSOCIATION OF NEW CUMULATIVE    │
│ EJECTION AMOUNT WITH NOZZLE TIP  │
└─────────────────────────────────┘
                │
                ▼
┌─────────────────────────────────┐
│              END                 │
└─────────────────────────────────┘
```

# FIG. 11

| TYPE OF MATERIAL | REFERENCE TIP TEMPERATURE $T_{ts}$ (°C) | REFERENCE CHAMBER TEMPERATURE $T_{ts}$ (°C) | SERVICE LIFE DETERMINATION VALUE B | SERVICE LIFE DETERMINATION VALUE C |
|---|---|---|---|---|
| ABS | 330 | 85 | 3.13 | 1.34 |
| NYLON 12 | 355 | 120 | 2.15 | 0.92 |
| PC | 365 | 145 | 2.01 | 0.86 |
| PPSF | 415 | 225 | 0.92 | 0.39 |

# FIG. 12

## FIG. 13

```
┌─────────────────────────────────┐
│   SERVICE LIFE EXPIRATION        │
│   DETERMINATION PROCESS          │
└─────────────────────────────────┘
                │
                ▼               ┌── S211
┌─────────────────────────────────┐
│  ACQUISITION OF CUMULATIVE       │
│  EJECTION AMOUNT ASSOCIATED       │
│  WITH NOZZLE TIP                 │
└─────────────────────────────────┘
                │
                ▼          ┌── S212
```

$S / S_L > 0.50$ ?

YES

NO

┌── S213

NOTIFICATION OF SERVICE LIFE INFORMATION

END

## FIG. 14

```
   SERVICE LIFE EXPIRATION
   DETERMINATION PROCESS
            │
            │          ┌─ S311
            ▼
   ┌─────────────────────────────┐
   │ ACQUISITION OF CUMULATIVE EJECTION │
   │ AMOUNT ASSOCIATED WITH NOZZLE TIP  │
   └─────────────────────────────┘
            │          ┌─ S312
            ▼
         ◇───────────────────◇        YES
        ⟨ (S/SL)×(Tt / Tc)＞0.92 ⟩──────────┐
         ◇───────?───────────◇              │
            │                               ▼      ┌─ S313
            │ NO               ┌─────────────────────────────┐
            │                  │ NOTIFICATION OF SERVICE LIFE │
            │                  │      INFORMATION             │
            │                  └─────────────────────────────┘
            ▼
         ( END )
```

$$(S/S_L) \times (T_t / T_c) > 0.92 ?$$

# FIG. 15

SERVICE LIFE EXPIRATION
DETERMINATION PROCESS

S411

ACQUISITION OF CUMULATIVE EJECTION
AMOUNT ASSOCIATED WITH NOZZLE TIP

S412

$(S / S_L) \times (T_t / T_c) \times (t_v / t_w)$
$> 0.39$ ?

YES

S413

NOTIFICATION OF SERVICE LIFE
INFORMATION

NO

END

# FIG. 16

SERVICE LIFE EXPIRATION
DETERMINATION PROCESS

S511

ACQUISITION OF CUMULATIVE EJECTION
AMOUNT ASSOCIATED WITH NOZZLE TIP

S512

CALCULATION OF CUMULATIVE
EJECTION RATIO $S_R$

S513

$S_R > A1$ ?

YES

NO

S514

$S_R > A2$ ?

YES

NO

S515

NOTIFICATION OF SERVICE LIFE
INFORMATION

END

# FIG. 17

# FIG. 18

# FIG. 19

**EP 3 978 226 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006192710 A
- US 2017203507 A
- US 2019118258 A1